# EUROPEAN PATENT APPLICATION

(11) **EP 1 710 977 A1**
(43) Date of publication of application: **11.10.2006**
(21) Application number: 06112048.1
(22) Date of filing: 30.03.2006
(51) Int. Cl.: H04L 29/06, H04L 12/26

(54) **Method of sharing measurement data, system therefor and network node apparatus**

(30) Priority: 04.04.2005 GB 0506789
(71) Applicant: Agilent Technologies, Palo Alto, CA 94303-0870 (US)
(72) Inventor: Garcia, Francisco Javier, South Queensferry, Lothian EH30 9TG (GB); Gardner, Robert, South Queensferry, Lothian EH30 9TG (GB)
(74) Representative: Coker, David Graeme

(57) **Abstract**

Data are recorded relating to an event associated with a handover mechanism, the data being shared between a Home Agent and a Mobile Node by communicating the collected data using an extension header of a packet communicated between the Home Agent and the Mobile Node as part of the handover mechanism.

## Description

The present invention relates to a method of sharing measurement data of the type that, for example, is acquired by a first node to be shared with a second node in a communications system. The present invention also relates to a network node apparatus and a system for sharing measurement data. The present invention further relates to a method of measuring network performance and a system for measuring network performance.

### Background Art

The Internet comprises a large number of interconnected communications networks. In topological terms, the Internet comprises a large number of nodes that can communicate with each other. It is sometimes desirable for a Mobile Node to connect to the Internet to communicate with other nodes in the Internet. A node with which the Mobile Node communicates is known as a Correspondent Node. In practice, the Mobile Node can have a number of Correspondent Nodes.

As implied by the word "mobile", the Mobile Node is not limited to a single topological point of attachment to the Internet. Instead, the Mobile Node can move between and connect to a number of topological points of attachment to the Internet. The Mobile Node is identified by a Home Address, the Home Address corresponding to an Internet Protocol (IP) address on a Home Link. The Home Link is a communications link with a router known as a Home Agent, the Home Link corresponding to an initial topological point of attachment to the Internet; a link with a router located at a topological point of attachment other than the initial topological point of attachment is known as a Foreign Link.

When the Mobile Node migrates from the initial topological point of attachment to the Internet to the Foreign Link, routers on the Foreign Link transmit advertisements comprising information that enables the Mobile Node automatically to configure a Care-of Address. The Care-of Address is an IP address identifying the current topological point of attachment of the Mobile Node to the Internet. Of course, the skilled reader will appreciate that other techniques exist to form Care-of addresses, for example Dynamic Host Configuration Protocol (DHCP) v6.

Subsequent movements of the Mobile Node to other Foreign Links result in the allocation of respective new Care-of addresses. The Care-of address is registered with the Home Agent. In order to maintain continuous connectivity between a Correspondent Node and the Mobile Node, mobility protocols are required.

The Mobile IPv6 protocol was devised by the Mobile-IP working group of the Internet Engineering Task Force (IETF) and is designed to manage the mobility of the Mobile Node. This protocol has a specific mechanism, known as "handover", to maintain communications above the IP layer when the Mobile Node attempts to migrate, for example, from the Home Link to the Foreign Link. The handover mechanism of Mobile IPv6 requires a number of message exchanges between the Home Agent on the Home Link, the Mobile Node and Correspondent Nodes.

Associated with the handover mechanism, and in particular, the various message exchanges is a total handover latency composed of the sum of individual delays associated with each message solicitation or message exchange of the handover mechanism. Information about one or more of the stages of the handover mechanism has diagnostic value in order to manage the handover mechanisms. Indeed, data collected is used to monitor current operation and "health" of the network.

In this respect, it is known to extract low-level statistics, such as packet and byte counts, in respect of packets flowing across an interface of a router using the Simple Network Management Protocol. Also, systems such as NetFlow produced by Cisco Systems, Inc. support higher-level flow-based monitoring of network traffic. However, such integrated systems can place a significant burden on network devices, such as routers, used to provide monitoring statistics. Consequently, to avoid network device performance problems, some network operators deploy probes. One such known network probe is the Remote MONitoring (RMON) probe, as described in "SNMP, SNMPv2, SNMPv3, and RMON 1 and 2" (William Stallings, Addison Wesley). The RMON probe is used where a detailed view of network traffic is required, particularly when troubleshooting. However, such probes are expensive and so are deployed in a selective small number of places. Consequently, when faults occur, they do not always occur in locations where a probe is present.

Additionally, in relation to monitoring the handover mechanism, the measurements made by the above known monitoring techniques are either too low-level or would preferably need the Home Agent and every Foreign Link or Internet Access Point to be equipped with measurement capabilities. Furthermore, if IPSec (Internet Protocol Security) security is being employed, Mobile IPv6 mobility headers may be encrypted and so untraceable on a link unless encryption keys are made available and distributed to network monitoring systems. Also, when passively monitoring a node or a link, all measurement data must be suitably tagged, collected and correlated in order to calculate total handover latency as well as individual, constituent, message transaction delays associated with Mobile IPv6 handovers.

Another technology, Voice over IP, is a growing Internet Protocol (IP) technology that also uses packets of data, but to communicate voice calls between two or more terminals equipped to handle VoIP calls. Traditionally, packet switched communications have been used to communicate data between terminals, for example web pages. The popularity of VoIP is increasing due to recent technical advances in relation to the production of VoIP chipsets that are suitable for mobile computing devices, such as Personal Digital Assistants (PDAs) and other mobile terminals. With the onset and growth in mobile and wireless Local Area Network (LAN) markets, it is predicted that VoIP will become the dominant integrating and convergent application of choice for telephony.

However, one factor that will contribute to the success of VoIP telephony is Quality of Service (QoS). Consequently, Service Assurance products targeting VoIP have been developed and presently adopt either one of two technologies to address operational performance characteristics of supporting infrastructure of VoIP calls and voice quality.

One Service Assurance technology is known as Active Measurement Technology, and involves the generation, transmission and capture of well-formed synthetic traffic within a packet-switched network that supports VoIP calls to address a particular performance metric of interest in relation to a service. However, the measurements relate to the synthetic traffic and not real user traffic, and so do not reflect the experience of the real user traffic.

An alternative technology is known as Passive Measurement Technology, and uses a tap to couple a probe to a link between SIP components in order to observe real user traffic on the link without disruption to the service. However, the passive techniques rely on filtering, sampling and data reduction relating to observed real user traffic on the link with other annotations such as data capture timestamps. These techniques require probing of multiple links simultaneously, which complicates the deployment of such service assurance technologies and increases the associated cost. Furthermore, in large operator networks, deployment of such technology has proven non-scalable and, in some core networks, is known to make excessive demands upon available processing power with respect to monitoring of all connections to be monitored. An additional disadvantage is the processing complexity associated with making two point measurements, for example one-way delay measurements.

### Disclosure of Invention

According to a first aspect of the present invention, there is provided a method of sharing measurement data between a first node and a second node, the measurement data having been acquired by the first node and relating to an event associated with a handover mechanism or a SIP signalling transaction in a communications network the method comprising: selecting a signalling packet to be sent from the first node to the second node as part of a process related to the handover mechanism or the SIP transaction, the signalling packet having a data structure definition associated therewith; and incorporating the measurement data in the signalling packet in accordance with the data structure definition prior to sending the signalling packet to the second node.

It should be understood that the event associated with the handover mechanism may be any event that takes place either as part of the handover mechanism or is required or desirable as a result of the handover mechanism being employed to facilitate communications between the first and/or second node and/or any other node.

The part of a process related to the handover mechanism may be any dialogue be it unidirectional or bi-directional between the first node and/or the second node and/or any other node. The part of the process related to the handover mechanism may be the event associated with the handover mechanism.

The method may further comprise: receiving the signalling packet associated at the second node; and obtaining the measurement data from the signalling packet.

The measurement data may be stored at the second node.

The handover mechanism may be supported by a Mobile IPv6 protocol.

The data structure definition may be an extendible schema. The extendible schema may be an extension header of the signalling packet.

The first node may be any one of a home node, a mobile node or a correspondent node. The second node may be the home node provided the first node is not the home node. Likewise, the second node may be the mobile node provided the first node is not the mobile node. Likewise, the second node may be the correspondent node when the first node is not the correspondent node.

The measurement data recorded may not be deleted for a predetermined period of time.

A computer program code element may be provided, comprising computer program code means to make a computer execute the method as set forth above in relation to the first aspect of the present invention.

The computer program code element may be embodied on a computer readable medium.

According to a second aspect of the present invention, there is provided a network node apparatus for participating in a handover mechanism or a SIP signalling transaction in a communications network, the apparatus comprising: a data store; a processing resource arranged to provide: a measurement recorder for recording measurement data relating to an event associated with the handover mechanism or the SIP transaction in the data store; a packet selector for identifying a signalling packet forming part of a process related to the handover mechanism or the SIP transaction and to be sent, when in use, to another node participating in the handover mechanism or the SIP transaction, the signalling packet having a data structure definition capable of supporting incorporation of additional information in the signalling packet; a message modifier for incorporating the measurement data in the signalling packet in accordance with the data structure definition of the signalling packet; and a packet forwarder for forwarding the signalling packet to the another node.

According to a third aspect of the present invention, there is provided a network node apparatus for participating in a handover mechanism or a SIP signalling transaction in a communications network, the apparatus comprising: a data store; a processing resource arranged to provide: a message receiver for receiving a signalling packet forming part of a process related to the handover mechanism or the SIP transaction and incorporation of measurement data therein by virtue of a data structure definition of the signalling packet, the measurement data relating to an event associated with the handover mechanism or the SIP transaction; a measurement extractor for extracting the measurement data from the signalling packet; and a data recorder for recording the measurement data in the data store.

According to a fourth aspect of the present invention, there is provided a system for sharing measurement data between a first node and a second node, the measurement data having been acquired, when in use, at the first node and relating to an event associated with a handover mechanism or a SIP signalling transaction in a communications network, the system comprising: a packet selector for selecting a signalling packet to be sent from the first node to the second node as part of a process related to the handover mechanism or the SIP transaction, the signalling packet having a data structure definition associated therewith; and a packet modifier for incorporating the measurement data in the signalling packet in accordance with the data structure definition prior to sending the signalling to the second node.

It is thus possible to provide a method of collecting measurement data, a network node apparatus and a system for collecting measurement data that each facilitate IPv6 troubleshooting. In particular, subsequent correlation of events or messages is not required, since related messages are always kept together as part of the measurement process and "piggybacked" between the Mobile Node and Home Agent and vice-versa, as required. Furthermore, encryption of signalling transactions at the IP layer do not prevent collection of measurement data, because through interfacing with the protocol stack at the correct point, monitoring and piggybacking can be performed before encryption for an originating packet and just after decryption for a terminating packet. Additionally, low bandwidth overhead is incurred compared to passive monitoring approaches, since the measurement data is added to existing packets and does not require its own fully dedicated IPv6 packets for transportation, except perhaps as a final means of transporting a complete measurement trace back to a central management station. Advantageously, an end-to-end measurement technique is provided that only requires instrumentation at two points: the Home Agent and Mobile Node, although a more basic method might only use one point of instrumentation at either end, resulting in a low number of instrumented sites or devices and, hence, the method is easily scalable. Also, some baseline measurements are possible without the need for synchronised clocks; relative time can be employed instead through the use of the instrumented node's local clock.

It is also possible to provide a method of sharing measurement data, a system for sharing measurement data and a node apparatus that obviates the need to perform subsequent correlation of events or messages, due to retention of related data together as part of a measurement process and "piggybacking" of information to and from collaborating measurement points. Since measurement data is added to existing packets, a low bandwidth overhead is incurred, compared to the active and passive measurement approaches described above that require fully fledged transport packets of their own. Further, the exploitation of real user signalling traffic for piggybacking measurements and triggers results in measurements that truly reflect the experience of real user traffic. Additionally, data collection from the collaborating measurement points is an external issue, for which all measurement approaches exploit existing techniques for data collection, for example, Management Information Bases (MIBs) and a Simple Network Management Protocol (SNMP), streaming of results at periodic intervals, request/response services, or publish/subscribe services. Further, the present measurement technique is end-to-end in nature and, as such, only requires end systems to be instrumented for the provision of sufficient data to enable certain calculations to be performed, thereby reducing cost, complexity and a requirement for specialised probes to perform the same functionality. Additionally, data can be shared, progress monitored and/or measurements made in relation to messages, transactions and/or dialogues. It is also possible to perform some baseline measurements without the need for synchronised clocks, relative time being employed instead through use of local clocks of instrumented nodes. Hence, it is thus possible to provide simpler, more scalable and more cost effective VoIP Service Assurance tools than known tools.

### Brief Description of Drawings

At least one embodiment of the invention will now be described, by way of example only, with reference to the accompanying drawings, in which:
**Figure 1** is a schematic diagram, in overview, of a communications network;
**Figure 2** is a schematic diagram of a Home Node of Figure 1;
**Figure 3** is a schematic diagram of a Mobile Node and a Correspondent Node of Figure 1;
**Figure 4** is a message sequence chart of communications according to a method constituting a first embodiment of the invention;
**Figure 5** is a message sequence chart of communications according to another method constituting a second embodiment of the invention;
**Figure 6** is a message sequence chart of communications according to a further method constituting a third embodiment of the invention.
**Figure 7** is a schematic diagram of network nodes for supporting SIP communications in relation to a call between a first host terminal and a second host terminal;
**Figure 8** is a schematic diagram of a protocol stack for use with the network nodes of Figure 7;
**Figure 9** is a message sequence chart of signalling messages communicated between the first host terminal and a SIP Registrar server of Figure 7, and including timing measurements made that constitute an embodiment of the invention;
**Figure 10** is a table, shown in part, of calculation results obtained from measurement data recorded in relation to the message sequence chart of Figure 9;
**Figure 11** is a graph of the calculation results based upon the table of Figure 10;
**Figure 12** is a message sequence chart of a VoIP message SIP dialogue for setting up a VoIP call;
**Figure 13** is a table, shown in part, of sample calculation results obtained from measurement data recorded in relation to the VoIP dialogue of Figure 12;
**Figure 14** is a graph of a first number of the calculation results based upon the table of Figure 13; and
**Figure 15** is a graph of a second number of the calculation results based upon the table of Figure 13.

### Detailed Description

Throughout the following description identical reference numerals will be used to identify like parts.

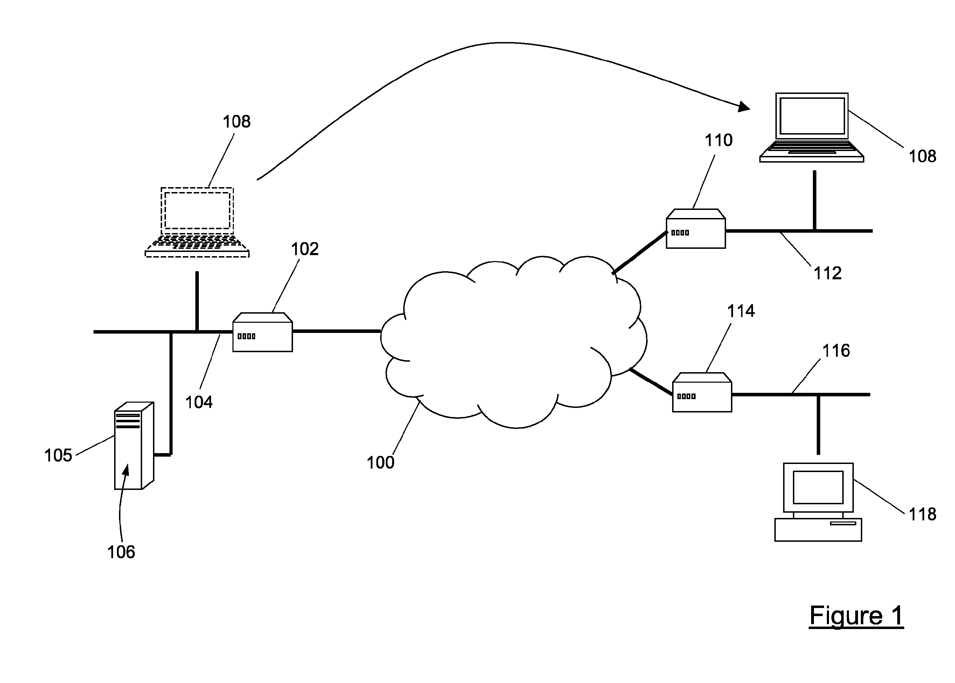

Referring to Figure 1, a communications network, for example the Internet 100, comprises a plurality of interconnected communications networks. As such, a first, home, router 102 couples a Home Link 104, constituting a home subnet and a part of the Internet 100, to the rest of the Internet 100 via a first Internet Service Provider (ISP) (not shown). The Home Link 104 is coupled to a first computing apparatus, for example a first Personal Computer (PC), constituting a Home Node 105, which executes network management software constituting a Home Agent 106. It should be appreciated that the Home Node 105 does not have to be the PC, but can be any other suitable computing device that has the necessary datagram forwarding and tunnelling capabilities, such as another router on the Home Link 104. In an initial state, the Home Link 104 is also coupled to a Mobile Node 108, for example a mobile computing device, such as a laptop computer.

Similarly, a second, foreign, router 110 couples a Foreign Link 112, constituting a foreign subnet and a part of the Internet 100, to the rest of the Internet 100 via a second ISP (not shown). The Foreign Link 112 is also capable of being coupling to the Mobile node 108, should the Mobile Node 108 migrate to the foreign subnet.

A third router 114 couples a Correspondent Link 116, constituting a correspondent subnet, constituting a part of the Internet 100, to the rest of the Internet 100 via a third ISP (not shown). The Correspondent Link 116 is coupled to a Correspondent Node 118, for example a second computing apparatus, such as a second PC, the Correspondent Node 118 having a need to communicate with the Mobile Node 108.

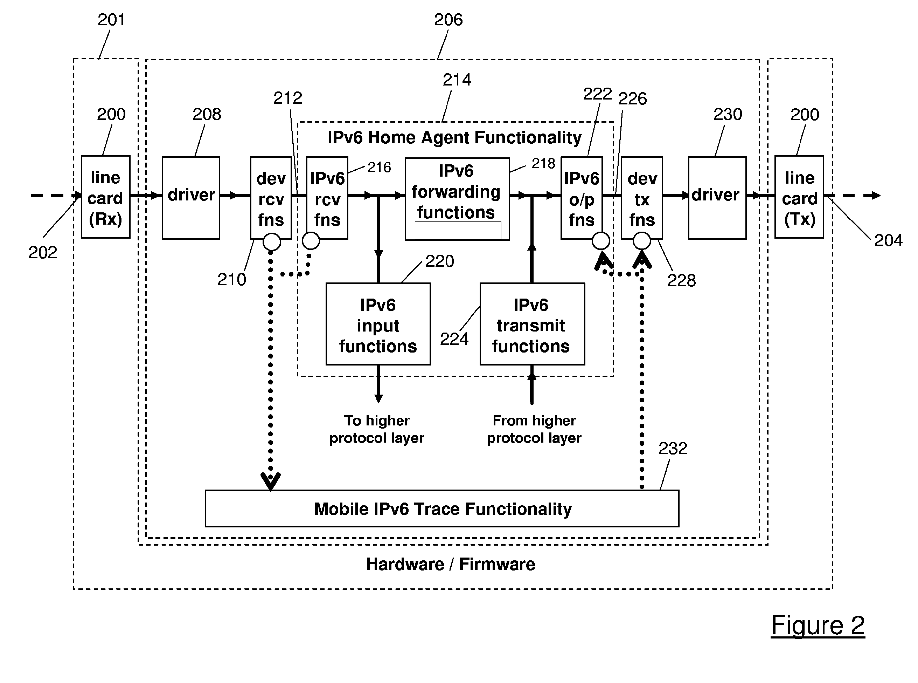

Referring to Figure 2, the Home Node 105 comprises a number of line cards 200, the functionality of which is provided by a combination of hardware and firmware 201. Each line card 200 has an input 202 for receiving packets from network nodes and an output 204 for sending packets to other network nodes. The line card 200 is coupled to a central processing resource that has a first kernel 206, in this example a Linux kernel, the first kernel 206 supporting an input driver unit 208 coupled to a device receive functions unit 210, network stack software that receives datagrams from a device driver, performs necessary processing according to protocols being used, and forwards or drops (discards) datagrams as required. The device receive functions unit 210 is capable of communicating with a Home Agent functionality unit 214 via an input 212; the Home Agent functionality unit 214 being provided, in this example, by code fragments that modify the normal IPv6 functionality of the protocol stack supported by first kernel 206. The input 212 of the Home Agent functionality unit 214 is coupled to an IPv6 receive functions unit 216, the IPv6 receive functions unit 216 being coupled to an IPv6 forwarding functions unit 218 and an IPv6 input functions unit 220. In this example, the IPv6 input functions unit 220 is coupled to higher protocol layer functions (not shown), the operation of which is known in the art and so shall not be described further herein.

The IPv6 forwarding functions unit 218 is coupled to an IPv6 output functions unit 222, an IPv6 transmit functions unit 224 also being coupled to the IPv6 output functions unit 222. In this example, higher protocol layer functions (not shown) are also coupled to the IPv6 transmit functions unit 224, the operation of the higher protocol layer functions is known in the art and so shall not be described further herein. The IPv6 output functions unit 222 is also capable of communicating with the Home Agent functionality unit 214 via an output 226, the output 226 of the Home Agent functionality unit 214 being coupled to a device transmit functions unit 228. The device transmit functions unit 228 is coupled to an output driver unit 230, the output driver unit 230 being coupled to the line card 200.

In order to support measurements of any operational parameters relating to or necessary or desirable as a result of the handover mechanism, the kernel 206 supports a Mobile IPv6 trace functionality unit 232. The trace functionality unit 232 is capable of communicating with the device receive functions unit 210 and the IPv6 receive functions unit 216, as well as the IPv6 output functions unit 222 and the device transmit functions unit 228.

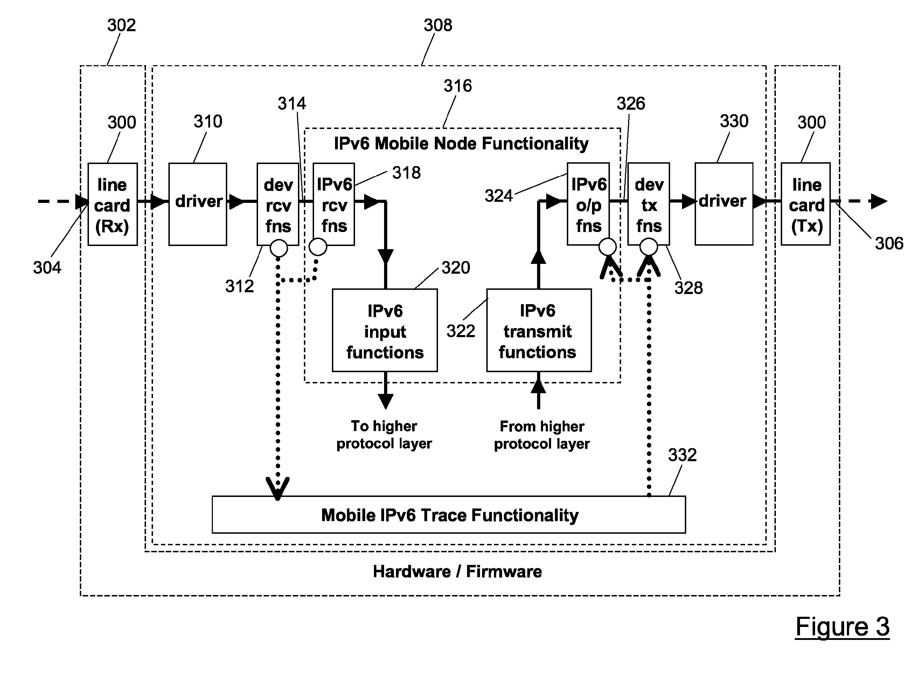

Turning to Figure 3, the Mobile Node 108 comprises a number of line cards 300, the functionality of which is provided by a combination of hardware and firmware 302. In the present example, the number of line cards 300 is a single line card. The line card 300 has an input 304 for receiving packets from network nodes and an output 306 for sending packets to other network nodes. The line card 300 is coupled to a central processing resource that has a second kernel 308, in this example a Linux kernel, the second kernel 308 supporting an input driver unit 310 coupled to a device receive functions unit 312, network stack software that receives datagrams from a device driver, performs necessary processing according to protocols being used, and forwards or drops (discards) datagrams as required. The device receive functions unit 312 is capable of communicating with a Mobile Node functionality unit 316 via an input 314; the Mobile Node functionality unit 312 being provided, in this example, by code fragments that modify the normal IPv6 functionality of the protocol stack supported by second kernel 308. The input 314 of the Mobile Node functionality unit 316 is coupled to an IPv6 receive functions unit 318, the IPv6 receive functions unit 318 being coupled to an IPv6 input functions unit 320. In this example, the IPv6 input functions unit 320 is coupled to higher protocol layer functions (not shown), the operation of which is known in the art and so shall not be described further herein.

The Mobile Node functionality unit 316 also comprises an IPv6 transmit functions unit 322 coupled to an IPv6 output functions unit 324. In this example, higher protocol layer functions (not shown) are coupled to the IPv6 transmit functions unit 322, the operation of the higher protocol layer functions is known in the art and so shall not be described further herein. The IPv6 output functions unit 324 is coupled to an output 326 of the Mobile Node functionality unit 316, the output 326 of the Mobile Node functionality unit 316 being coupled to a device transmit functions unit 328. The device transmit functions unit 328 is coupled to an output driver unit 330, the output driver unit 330 being coupled to the line card 300.

In order to support measurements of the operational parameters, the second kernel 308 supports a Mobile IPv6 trace functionality unit 332. The trace functionality unit 332 is capable of communicating with the device receive functions unit 312 and the IPv6 receive functions unit 318, as well as the IPv6 output functions unit 324 and the device transmit functions unit 328.

In operation (Figure 1), the Mobile Node 108 is initially attached to the Home Link 104. At some point in time, it will be necessary to disconnect the Mobile Node 108 from the Home Link 104 and attach the Mobile Node 108 to the Foreign Link 112, thereby migrating the Mobile Node 108 from the home subnet to the foreign subnet.

When this time comes, in order to migrate the Mobile Node 108 from the home subnet to the foreign subnet, it is necessary to use a handover mechanism provided by the Mobile IPv6 protocol. Not all handovers between subnets are successful and so it is necessary to monitor the handover mechanism in order to obtain diagnostically useful information concerning one or more stages of the handover mechanism. In this respect, IPv6 extension headers, as described in RFC 2460 (www.ietf.org/rfc/rfc2460.txt), are used, for example a so-called Destination Options header, which allow additional information to be included between a main header and a payload of a packet. However, it should be appreciated that other known extendible schemas can be employed in relation to protocols other than IP if the operational parameters to be measured necessitate the use of extendible schemas of other protocols.

Use of extension headers in this way requires modifications and extensions to existing IPv6 protocol stacks employed in existing Home Agents and/or Mobile Nodes in order to support the structure described above in relation to Figures 2 and 3. In this example, a Unix environment is used with dynamically loadable kernel modules, namely the Mobile IPv6 trace functionality unit 232 and the Mobile IPv6 trace functionality unit 332, that interface with respective points in the kernel protocol stack via appropriately located kernel "hooks" that are pre-compiled into the kernel protocol stack. Alternatively, the modifications and extensions can be achieved by applying a patch to source code of the kernel protocol stack and then recompiling the kernel. In this respect, the first and second kernels 206, 308 are adapted in accordance with European Patent publication no. EP-A-1 401 147 in order to provide support for incorporation of measurement data into the extension header of a packet. However, whilst Unix-based kernels can be employed, it is possible to use dynamically linkable libraries, available for other kernels such as various versions of Microsoft® Windows™, to achieve the same functionality as described herein.

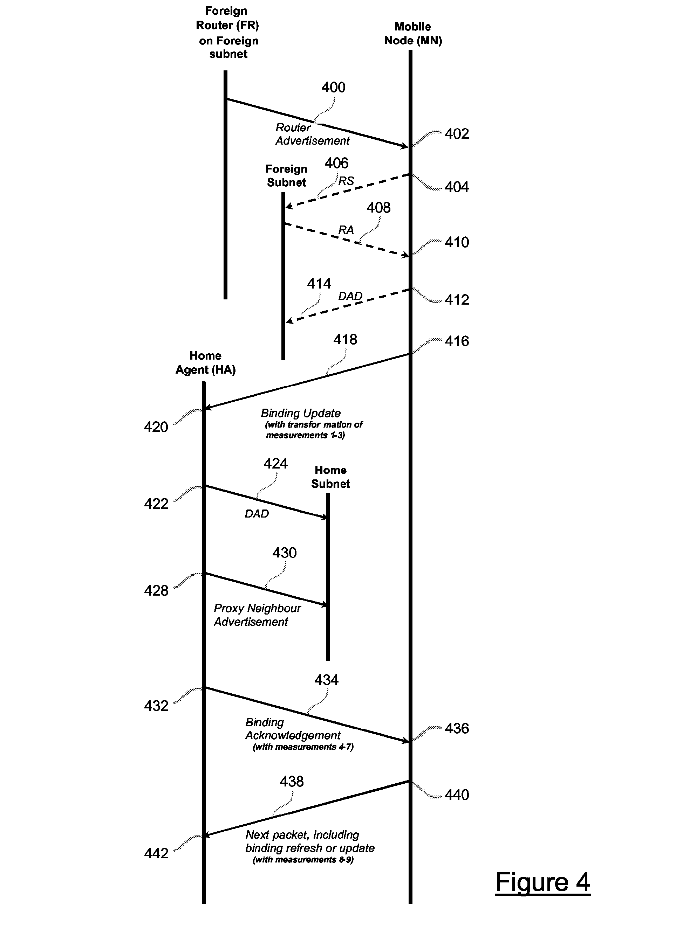

Turning to Figure 4, upon attachment of the Mobile Node 108 to the Foreign Link 112, the Mobile Node 108 is implicitly aware of the migration to the foreign subnet by dint of a movement detection algorithm and the reception of a router advertisement message 400 received from the foreign router 110 and is a starting point for a Mobile IPv6 handover, i.e. execution of the handover mechanism. The router advertisement message 400 contains a different IPv6 address prefix to that which was previously being received by the Mobile Node 108 when attached to the Home Link 104. Consequently, the trace functionality unit 332 of the Mobile Node 108 recognises (402) the router advertisement message 400 that contains the different IPv6 address prefix and then computes a Handover Identification Value (HIV), which consists of a counter, for example a 16-bit counter, combined with a unique identifier pertaining to the Mobile Node 108, for example an interface address of the Mobile Node 108, such as an Extended Unique Identifiers-64-bit (EUI-64) address, and a new point of attachment indicator, for example the different IPv6 address prefix; the HIV is associated with all future measurement data recorded in relation to the IPv6 handover that is current. The trace functionality unit 332 also computes a timestamp that is an arrival time of the router advertisement message 400 and forms a first data structure containing the timestamp, the HIV value, and a message type identifier. In this example, the first data structure is minimal and contains the timestamp and the HIV.

The first data structure forms a first entry in a temporary store of data structures relating to the current Mobile IPv6 handover, the temporary store acquiring a new "active" store status indicative of the fact that the Mobile IPv6 handover is in progress in relation to the Mobile Node 108. When no longer active, for example after a handover has been completed successfully or has reached a stage in the handover mechanism which cannot be exceeded, such "non-active" stores can be assigned a lifetime, during which time their contents may be forwarded to a centralised management process. Upon expiry of the lifetime, the non-active stores are erased from memory, or upon collection of their contents by an external management agent (not shown). Alternatively, the non-active data store is erased and/or overwritten by the trace functionality unit 332 when memory resources are exhausted for additional data structures in the active store.

Subsequently, but optionally, the Mobile Node 108 sends (404) a Neighbour Unreachability Detection (NUD) Router Solicitation message 406 as part of the handover mechanism in order to establish whether or not movement to another subnet has occurred. In order to record this event, i.e. the sending of the NUD Router Solicitation message 406, the trace functionality unit 332 forms a second data structure comprising at least a sending time of the NUD Router Solicitation message 406 and adds the second data structure to the active store. In response to the NUD Router Solicitation message 406, the foreign router 110 sends an NUD Router Advertisement message 408 over the foreign subnet, receipt of which is detected by the Mobile Node 108. Thereafter, the trace functionality unit 332 forms (410) a third data structure with at least the receipt time of the NUD Router Advertisement message 408 and adds the third data structure to the active store.

Subsequently, and again optionally, the Mobile Node 108 sends (412) a Duplicate Address Detection (DAD) message 414 on the foreign (new) subnet. The trace functionality unit 332 then forms a fourth data structure comprising at least a sending time of the DAD message 414, the HIV value and a message type identifier, the third data structure being added to the active store.

Next, the Mobile Node 108 prepares to send (416) a Binding Update (BU) message 418 to the Home Agent 106 to register a care-of address for the Mobile Node 108 in accordance with the Mobile IPv6 handover mechanism, the trace functionality unit 332 forming a fifth data structure, comprising at least the HIV value, a message type identifier and a timestamp for the sending time of the BU message in order to record the event that is the sending of the BU message 416. The trace functionality unit 332 then adds the fifth data structure to the active store and, prior to sending (416) the BU message 418, includes the first, second, third fourth and fifth data structures collected as data in the form of Destination Options of an IPv6 Destination Options Header of the BU message 418. The BU message 418, incorporating the first, second, third, fourth and fifth data structures, is then received (420) by the Home Agent 106.

Upon receipt of the BU message 418 and as part of the Mobile Ipv6 handover mechanism, the Home Agent 106 creates a new entry in a binding cache (not shown) of the Home Agent 106 to associate the home address of the Mobile Node 108 with the care-of address. The trace functionality unit 232 of the Home Agent 106 collects the data structures from the Destination Options Header of the received BU message 418, which forms a first five entries in a temporary store of data structures of the Home Agent 106 pertaining to the Mobile IPv6 handover in progress relating to the Mobile Node 108, identified by the HIV, the temporary store of the Home Agent 106 also acquiring an "active" store status for the Mobile Node 108. In addition, the trace functionality unit 232 of the Home Agent 106 forms a sixth data structure containing at least a timestamp for the arrival time of the BU message 418, the HIV value and a message type identifier; the sixth data structure is then stored in the active data store of the Home Agent 106.

The Home Agent 106 then sends (422) a Duplicate Address Detection (DAD) message 424 on the home subnet, and the trace functionality unit 232 of the Home Agent 106 forms a seventh data structure with at least the sending time of the DAD packet, the HIV value and a message type identifier. The trace functionality unit 232 of the Home Agent 106 then adds the seventh data structure to the active store of the Home Agent 106. Thereafter, the Home Agent 106 sends (428) a Proxy Neighbour Advertisement (PNA) message 430 to the home subnet, and the trace functionality unit 232 forms an eighth data structure comprising at least a sending time of the PNA message 430, the HIV value and a message type identifier. The eighth data structure is then added to the active store of the Home Agent 106.

Subsequently, the Home Agent prepares to send (432) a Binding Acknowledgement message 434 to the Mobile Node 108 to signal to the Mobile Node 108 the formation of a valid binding association. To record this event, the trace functionality unit 232 of the Home Agent 106 forms a ninth data structure comprising at least a timestamp for the sending time of the Binding Acknowledgement message 434, the HIV value and a message type identifier, and adds the ninth data structure to the active store of the Home Agent 106. Additionally, prior to sending the Binding Acknowledgement message 434, the trace functionality unit 232 of the Home Agent 106 includes the sixth, seventh, eighth and ninth data structures collected as data in the form of Destination Options of an IPv6 Destination Options Header of the Binding Acknowledgement message 434.

The Binding Acknowledgement message 434 is then received (436) by the Mobile Node 108, and the trace functionality unit 332 of the Mobile Node 108 collects the data sixth, seventh, eighth and ninth structures from the Destination Options Header of the Binding Acknowledgement message 434, which forms a next four entries in the active store of the Mobile Node 108. Additionally, the trace functionality unit 332 of the Mobile Node 108 forms a tenth data structure containing at least a timestamp for the arrival time of the Binding Acknowledgement message, the HIV value, and a message type identifier. The tenth data structure is then added to the active store of the Mobile Node 108.

After recordal of the tenth data structure in the active store of the Mobile Node 108, the trace functionality unit 332 of the Mobile Node 108 uses a next available packet 438 that is being prepared to be sent (440) to the Home Agent 106, for example BU messages or Binding Refresh messages, to convey, prior to sending the next available packet, the tenth data structure collected in the form of Destination Options of an IPv6 Destination Options Header of the next available packet.

Upon receipt (442) of the next available packet, the Home Agent 106 collects the tenth data structure from the Destination Options Header, which forms a final entry in the active store of the Home Agent 106.

In another embodiment, the Mobile Node 108 remigrates from the foreign subnet to the home subnet, i.e. returns to the home subnet. For migration back to the home subnet, the handover mechanism employs a different set of message transactions to effect handover. However, the measurement data sharing procedure is quite similar to that already described above, but sufficiently different nevertheless to merit description.

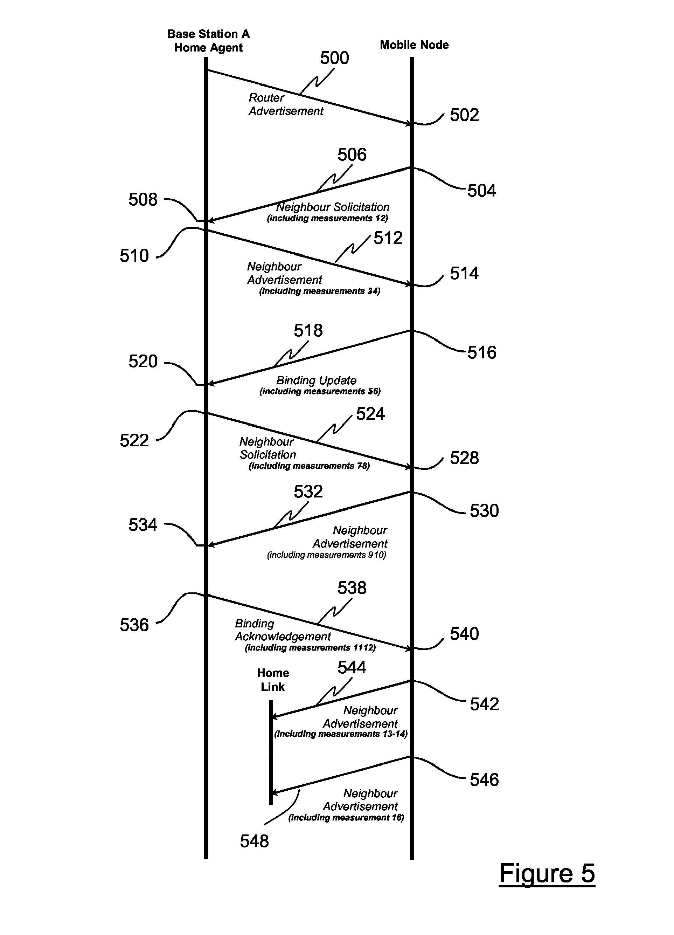

Referring to Figure 5, the same objective of the above already-described monitoring process is followed in relation to the remigration of the Mobile Node 108 from the foreign subnet to the home subnet, namely to maintain up-to-date information about message transaction dialogues associated with each Mobile IPv6 handover at both the Home Agent 106 and Mobile Node 108.

Upon re-attachment of the Mobile Node 108 to the Home Link 104, the Mobile Node 108 is implicitly aware of the remigration to the home subnet by dint of a movement detection algorithm and the reception of one or more Router Advertisement messages 500 received from the home router 102 and is a starting point for another Mobile IPv6 handover. The Router Advertisement message 500 contains a different IPv6 address prefix to that which was previously being received by the Mobile Node 108 when attached to the Foreign Link 112. Consequently, the trace functionality unit 332 of the Mobile Node 118 recognises (502) the Router Advertisement message 500 that contains the different IPv6 address prefix and then computes a new Handover Identification Value (HIV) in the manner already described above. As before, the trace functionality unit 332 also computes a timestamp for the arrival time of the Router Advertisement message 500 and forms a first data structure containing the timestamp, the HIV value, and a message type identifier. In this example, the first data structure is also minimal and simply contains the timestamp, the HIV and the IPv6 address prefix. The first data structure then forms a first entry in a new "active" store relating to the Mobile Node 108.

Subsequently, the Mobile Node 108 prepares to send (504) a first Neighbour Solicitation message 506 to the solicited-node multicast address of the home agent as part of the handover mechanism in order to discover the link-layer address of the home agent. The trace functionality unit 332 of the Mobile Node 108 then forms a second data structure, comprising a timestamp for the sending time of the first Neighbour Solicitation message 506, the HIV value, and a message type identifier, in order to record the event that is the sending of the first Neighbour Solicitation message 506. The trace functionality unit 332 then adds the second data structure to the active store of the Mobile Node 108 and, prior to sending (504) the first Neighbour Solicitation message 506, includes the first and second data structures collected as data in the form of Destination Options of an IPv6 Destination Options Header of the first Neighbour Solicitation message 506. The first Neighbour Solicitation message 506, incorporating the first and second data structures, is then received (508) by the Home Agent 106.

Upon receipt of the first Neighbour Solicitation message 506, the trace functionality unit 232 of the Home Agent 106 collects the first and second data structures from the Destination Options Header of the received first Neighbour Solicitation message 506, which forms a first two entries in a new active store relating to the Home Agent 106. In addition, the trace functionality unit 232 of the Home Agent 106 forms a third data structure containing a timestamp for the arrival time of the first Neighbour Solicitation message 506, the HIV value, and a message type identifier; the third data structure is then stored in the active data store of the Home Agent 106.

In response to the first Neighbour Solicitation message 506, the home router 102 prepares to send (510) a first Neighbour Advertisement message 512, receipt of which is detected by the Mobile Node 108. The trace functionality unit 232 of the Home Agent 106 then forms a fourth data structure, comprising a timestamp for the sending time of the first Neighbour Advertisement message 512, the HIV value, and a message type identifier, in order to record the event that is the sending of the first Neighbour Advertisement message 512. The trace functionality unit 232 of the Home Agent 106 then adds the fourth data structure to the active store and, prior to sending (510) the first Neighbour Advertisement message 512, includes the third and fourth data structures collected as data in the form of Destination Options of an IPv6 Destination Options Header of the first Neighbour Advertisement message 512. The first Neighbour Advertisement message 512, incorporating the third and fourth data structures, is then received (514) by the Mobile Node 108.

Upon receipt of the first Neighbour Advertisement message 512, the trace functionality unit 332 of the Mobile Node 108 collects the third and fourth data structures from the Destination Options Header of the received first Neighbour Advertisement message 512, which forms third and fourth entries in the active store of the Mobile Node 108. In addition, the trace functionality unit 332 of the Mobile Node 108 forms a fifth data structure containing a timestamp for the arrival time of the first Neighbour Advertisement message 512, the HIV value, and a message type identifier; the fifth data structure is then stored in the active data store of the Mobile Node 108.

Thereafter, the Mobile Node 108 prepares to send (516) a special BU message 518 to the Home Agent 106 to indicate return of the Mobile Node 108 to the home link in accordance with the Mobile IPv6 handover mechanism, the trace functionality unit 332 forming a sixth data structure, comprising a timestamp for the sending time of the BU message 518, the HIV value, and a message type identifier, in order to record the event that is the sending of the BU message 516. The trace functionality unit 332 of the Mobile Node 108 then adds the sixth data structure to the active store of the Mobile Node 108 and, prior to sending (516) the BU message 518, includes the fifth and sixth data structures collected as data in the form of Destination Options of an IPv6 Destination Options Header of the BU message 518. The BU message 518, incorporating the fifth and sixth data structures, is then received (520) by the Home Agent 106.

Upon receipt of the BU message 518, the trace functionality unit 232 of the Home Agent 106 collects the data structures from the Destination Options Header of the received BU message 518, which forms the fifth and sixth entries in the active store of the Home Agent 106. In addition, the trace functionality unit 232 of the Home Agent 106 forms a seventh data structure containing a timestamp for the arrival time of the BU message 518, the HIV value, and a message type identifier; the seventh data structure is then stored in the active data store.

Subsequently, the Home Agent 106 prepares to send (522) a second Neighbour Solicitation message 524 as part of the handover mechanism in order to ensure that the Mobile Node 108 is present on the home link before sending any Binding Acknowledgement message. The trace functionality unit 232 of the Home Agent 106 then forms an eighth data structure, comprising a timestamp for the sending time of the second Neighbour Solicitation message 524, the HIV value, and a message type identifier, in order to record the event that is the sending of the second Neighbour Solicitation message 524. The trace functionality unit 232 then adds the eighth data structure to the active store of the Home Agent 106 and, prior to sending (522) the Neighbour Solicitation message 524, includes the seventh and eighth data structures collected as data in the form of Destination Options of an IPv6 Destination Options Header of the second Neighbour Solicitation message 524. The second Neighbour Solicitation message 524, incorporating the seventh and eighth data structures, is then received (528) by the Mobile Node 108.

Upon receipt of the Neighbour Solicitation message 524, the trace functionality unit 332 of the Mobile Node 108 collects the data structures from the Destination Options Header of the received second Neighbour Solicitation message 524, which forms seventh and eighth entries in the active store of the Mobile Node 108. In addition, the trace functionality unit 332 of the Mobile Node 108 forms a ninth data structure containing a timestamp for the arrival time of the second Neighbour Solicitation message 524, the HIV value, and a message type identifier; the ninth data structure is then stored in the active data store of the Mobile Node 108.

In response to the second Neighbour Solicitation message 524, the Mobile Node 108 prepares to send (530) a second Neighbour Advertisement message 532. The trace functionality unit 332 of the Mobile Node 108 then forms a tenth data structure, comprising a timestamp for the sending time of the second Neighbour Advertisement message 532, the HIV value, and a message type identifier, in order to record the event that is the sending of the second Neighbour Advertisement message 532. The trace functionality unit 332 then adds the tenth data structure to the active store of the Mobile Node 108 and, prior to sending (530) the second Neighbour Advertisement message 532, includes the ninth and tenth data structures collected as data in the form of Destination Options of an IPv6 Destination Options Header of the second Neighbour Advertisement message 532. The second Neighbour Advertisement message 532, incorporating the ninth and tenth data structures, is then received (534) by the Home Agent 106.

Upon receipt of the second Neighbour Advertisement message 532, the trace functionality unit 232 of the Home Agent 106 collects the data structures from the Destination Options Header of the received second Neighbour Advertisement message 532, which forms ninth and tenth entries in the active store of the Home Agent 106. In addition, the trace functionality unit 232 of the Home Agent 106 forms an eleventh data structure containing a timestamp for the arrival time of the second Neighbour Advertisement message 532, the HIV value, and a message type identifier; the eleventh data structure is stored in the active data store.

The Home Agent 106 then prepares to send (536) a Binding Acknowledgement message 538 to the Mobile Node 108 to signal to the Mobile Node 108 the formation of a valid binding association with the Home Agent 106 again, a tunnel and a reverse tunnel (described later herein) being established as a result of the formation of the binding association. To record this event, the trace functionality unit 232 of the Home Agent 106 forms a twelfth data structure comprising a timestamp for the sending time of the Binding Acknowledgement message 538, the HIV value, and a message type identifier, and adds the twelfth data structure to the active store associated with the Home Agent 106. Additionally, prior to sending the Binding Acknowledgement message 538, the trace functionality unit 232 of the Home Agent 106 includes the eleventh and twelfth data structures collected as data in the form of Destination Options of an IPv6 Destination Options Header of the Binding Acknowledgement message 538.

The Binding Acknowledgement message 538 is then received (540) by the Mobile Node 108, and the trace functionality unit 332 of the Mobile Node 108 collects the eleventh and twelfth data structures from the Destination Options Header of the Binding Acknowledgement message 538, which forms the next two entries in the active store of the Mobile Node 108. Additionally, the trace functionality unit 332 of the Mobile Node 108 forms a thirteenth data structure containing a timestamp for the arrival time of the Binding Acknowledgement message, the HIV value, and a message type identifier. The thirteenth data structure is then added to the active store of the Mobile Node 108.

In response to the Binding Acknowledgement message 538, the Mobile Node 108 sends (542) a third Neighbour Advertisement message 544 to all nodes on the Home Link 104 as part of the handover mechanism in order that the nodes on the Home Link 104 can make an association between a link-local address and a link-layer Medium Access Control (MAC) address of the Mobile Node 108. The trace functionality unit 332 of the Mobile Node 108 then forms a fourteenth data structure, comprising a timestamp for the sending time of the third Neighbour Advertisement message 544, the HIV value, and a message type identifier, in order to record the event that is the sending of the third Neighbour Advertisement message 544. The trace functionality unit 332 then adds the fourteenth data structure to the active store of the Mobile Node 108. Prior to sending (542) the third Neighbour Advertisement message 544, the trace functionality unit 332 includes the thirteenth and fourteenth data structures collected as data in the form of Destination Options of an IPv6 Destination Options Header of the third Neighbour Advertisement message 544. The third Neighbour Advertisement message 544, incorporating the thirteenth and fourteenth data structures, is received by the Home Agent 106.

Since the Home Agent 106 receives a copy of the multicast Neighbour Advertisement message 544, the trace functionality unit 232 of the Home Agent 106 collects the data structures from the Destination Options Header of the received third Neighbour Advertisement message 544, which forms the thirteenth and fourteenth entries in the active store of the Home Agent 106. In addition, the trace functionality unit 232 of the Home Agent 106 forms a fifteenth data structure containing a timestamp for the arrival time of the third Neighbour Advertisement message 544, the HIV value, and a message type identifier; the eleventh data structure is stored in the active data store.

The Mobile Node 108 then prepares to send (546) a fourth Neighbour Advertisement message 548 to all nodes on the Home Link 104 as part of the handover mechanism in order that the nodes on the Home Link 104 can make an association between a home address of the Mobile Node 108 and the link-layer (MAC) address of the Mobile Node 108. The trace functionality unit 332 of the Mobile Node 108 then forms a sixteenth data structure, comprising a timestamp for the sending time of the fourth Neighbour Advertisement message 548, the HIV value, and a message type identifier, in order to record the event that is the sending of the third Neighbour Advertisement message 548. The trace functionality unit 332 then adds the fifteenth data structure to the active store and prior to sending (546) the fourth Neighbour Advertisement message 548, the trace functionality unit 332 includes the sixteenth data structure collected as data in the form of Destination Options of an IPv6 Destination Options Header of the fourth Neighbour Advertisement message 548. The fourth Neighbour Advertisement message 548, incorporating the sixteenth data structures, is received by the Home Agent 106.

Since the Home Agent 106 receives a copy of the multicast Neighbour Advertisement message 548, the trace functionality unit 232 of the Home Agent 106 collects the data structures from the Destination Options Header of the received fourth Neighbour Advertisement message 548, which forms the sixteenth entry in the active store of the Home Agent 106. In addition, the trace functionality unit 232 of the Home Agent 106 forms a seventeenth data structure containing a timestamp for the arrival time of the fourth Neighbour Advertisement message 548, the HIV value, and a message type identifier; the seventeenth data structure is stored in the active data store. In order to communicate the fifteenth and/or the seventeenth data structures from the Home Agent 106 to the Mobile Node 108, an exceptional datagram can be used as a vehicle for communicating the fifteenth and/or seventeenth data structures from the Home Agent 106 to the Mobile Node 108. The exceptional datagram is, as its name suggests, formed exceptionally for the purpose of communicating the fifteenth and/or seventeenth data structures, hitherto not communicated from the Home Agent 106 to the Mobile Node 108. The Destinations Options Header of the exceptional packet is used to contain the one or both of the fifteenth and seventeenth data structures. Alternatively or additionally, the Destinations Options Header of a user (non-signalling) datagram sent from the Home Agent 106 to the Mobile Node 108 subsequent to completion of the handover procedure can be used as a vehicle to communicate the fifteenth and/or seventeenth data structures from the Home Agent 106 to the Mobile Node 108.

In another embodiment, the handover mechanism of Mobile IPv6 is used to effect migration of the Mobile Node 108 from the foreign subnet, to another foreign subnet (not shown). In such an example, the execution of the monitoring technique for the handover mechanism is similar to that already described above in relation to migration of the Mobile Node 108 from the home subnet to the foreign subnet and so for the sake of conciseness of description will not be described further herein.

In another example, Mobile IPv6 route optimisation is executed in order to allow the Correspondent Node 118 to accept a Binding Update message from the Mobile Node 108. The Mobile Node 108 uses the Binding Update message to inform the Correspondent Node 188 of a current location of the Mobile Node 108, i.e. a current care-of address for the Mobile Node 108. The Correspondent Node is then aware of the (new) care-of address to transmit packets directly to the Mobile Node 108 rather than via the Home Agent 106. Before the Correspondent Node 118 can accept a "binding update" from the Mobile Node 108, both the Correspondent Node 118 and the Mobile Node 108 enter into a dialogue, known as a "return routability" procedure so as to provide the Correspondent Node 118 with some assurances that the Mobile Node 108 is indeed addressable at the (claimed) care-of address as well as at a reported home address.

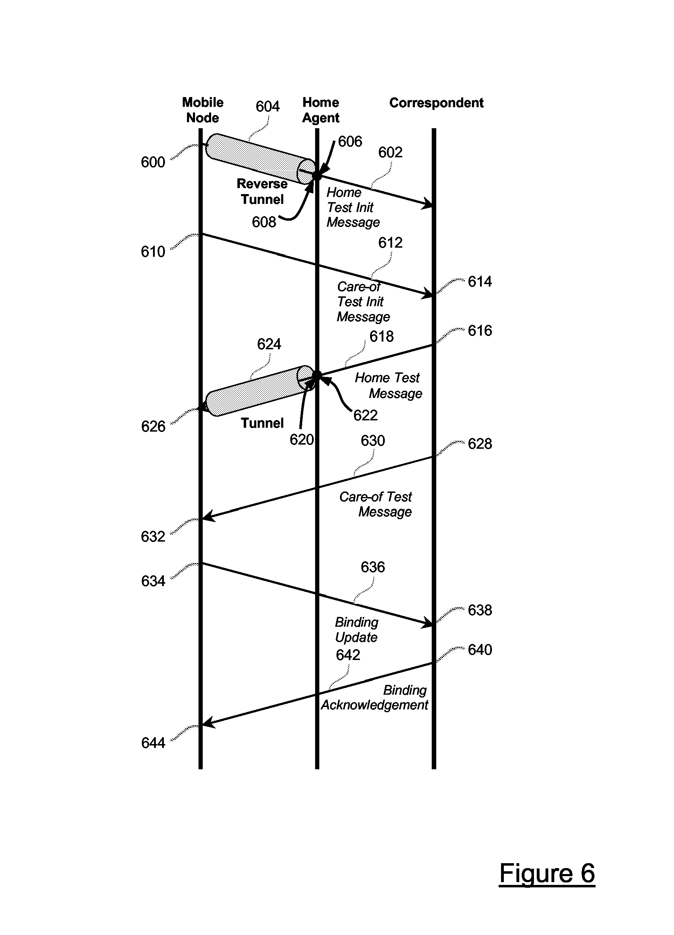

The above already-described monitoring procedure can be employed in relation to the return routability procedure in order to monitor execution of one or more events in the return routability procedure. In this respect, and referring to Figure 6, the return routability procedure is initiated by the Mobile Node 108 sending (600) a Home Test Init message 602, via the Home Agent 106. Consequently, the Home Test Init message 602 is firstly sent (600) to the Home Agent 106 via the reverse tunnel 604 already established by the binding association between the Mobile Node 108 and the Home Agent 106, and then the Home Test Init message 602 is forwarded (606) by the Home Agent 106 to the Correspondent Node 118.

However, before the Mobile Node 108 sends (600) the Home Test Init message 602, the trace functionality unit 332 of the Mobile Node 108 forms a first data structure comprising a sending time of the Home Test Init message 602, a new HIV value, and a message type identifier, in order to record the event that is the sending of the Home Test Init message 602. The first data structure is then stored in a further new active store of data structures relating to the current return routability procedure. Prior to sending (600) the Home Test Init message 602, the trace functionality unit 232 of the Home Agent 106 includes the first data structure collected as data in the form of Destination Options of an IPv6 Destination Options Header of the Home Test Init message 602.

Upon receipt (608) of the tunnelled Home Test Init message 602, the trace functionality unit 232 of the Home Agent 106 collects the first data structure from the Destination Options Header of the Home Test Init message 602, and stores the first data structure as a first entry in a further new active data store relating to the current return routability procedure, but with respect to the Home Agent 106. The trace functionality unit 232 of the Home Agent 106 then records the receipt of the Home Test Init message 602 by forming a second data structure comprising the time of receipt of the Home Test Init message 602, the HIV value, and a message type identifier, and then stores the second data structure in the active store of the Home Agent 106. The trace functionality unit 232 of the Home Agent 106 then forwards (606) the Home Test Init message 602 to the Correspondent Node 118, and forms a third data structure comprising the time of forwarding the Home Test Init message 602, the HIV value, and a message type identifier. The trace functionality unit 232 of the Home Agent 106 then adds the third data structure to the active store of the Home Agent 106.

The trace functionality unit 332 of the Mobile Node 108 then sends (610) a Care-of Test Init message 612 to the Correspondent Node 118 as well as forming a fourth data structure comprising a time of sending of the Care-of Test Init message 612, the HIV value, and a message type identifier.

Upon receipt (614) of the Care-of Test Init message 612, the Correspondent Node 118 sends (616) a Home Test message (618) to the Home Agent 106 for forwarding (620) to the Mobile Node 108. Upon receipt (622) of the Home Test message 618, the Home Agent 106 forms a fifth data structure comprising a time of receipt of the Home Test message 618, the HIV value, and a message type identifier. The Home Agent 106 then prepares to forward (620) the Home Test message 618 to the Mobile Node 108 using the tunnel 624 already established via the binding association between the Mobile Node 108 and the Home Agent 106. To record this event, the trace functionality unit 232 of the Home Agent 106 forms a sixth data structure comprising a timestamp for the forwarding time of the Home Test message 618, the HIV value, and a message type identifier, and adds the sixth data structure to the active store of the Home Agent 106. Additionally, prior to forwarding the Home Test message 618, the trace functionality unit 232 of the Home Agent 106 includes the second, third, fifth and sixth data structures collected as data in the form of Destination Options of an IPv6 Destination Options Header of the Home Test message 618.

Upon receipt (626) of the tunnelled Home Test message 618, the Mobile Node 108 collects the data structures from the Destination Options Header of the received Home Test message 618, which forms second, third, fifth and sixth entries in the active store of the Mobile Node 108. In addition, the trace functionality unit 332 of the Mobile Node 108 forms a seventh data structure containing a timestamp for the arrival time of the Home Test message 618, the HIV value, and a message type identifier; the seventh data structure is then stored in the active data store of the Mobile Node 108.

Subsequently, the Correspondent Node 118 sends (628) a Care-of Test message 630 directly to the Mobile Node 108. Upon receipt (632) of the Care-of Test message 630, the Mobile Node 108 forms an eighth data structure comprising a time of receipt of the Care-of Test message 630, the HIV value, and a message type identifier; the eighth data structure is then stored in the active data store of the Mobile Node 108. The Mobile node 108 then prepares to send (634) a BU message 636 to the Correspondent Node 118 and records the sending of the BU message 636 by forming a ninth data structure comprising a time of sending of the BU message 636, the HIV value, and a message type identifier, the ninth data structure being stored in the active data store of the Mobile Node 108.

Upon receipt (638) of the BU message 636, the Correspondent Node 118 sends (640) a Binding Acknowledgement message 642 that is received (644) by the Mobile Node 108. Thereafter, upon receipt of the Binding Acknowledgement message 642, the Mobile Node 108 forms a tenth data structure comprising the time of receipt of the Binding Acknowledgement message 642, the HIV value, and a message type identifier, the tenth data structure then being stored in the active data store of the Mobile Node 108. Since no further communication with the Home Agent 106 is necessary as part of the handover mechanism, a next packet to be sent to the Home Agent 106 from the Mobile Node 108 can be used to communicate the fourth, seventh, eighth, ninth and tenth data structures to the Home Agent 106. Alternatively, a so-called "dummy" message having an empty payload can be sent by the Mobile Node 108 to the Home Agent 106 after a predetermined time-out period, the fourth, seventh, eighth, ninth and tenth data structures being sent as data in the form of Destination Options of an IPv6 Destination Options Header of the dummy message. The data structures communicated in this way are can then be collected in the same manner as already described above in relation to other messages.

The data stores created by the Home Agent 106 and/or the Mobile Node 108 can be sent by the Home Agent 106 and/or the Mobile Node 108, respectively, to a centralised monitoring entity within the communications network, supporting a centralised monitoring process, for example an Operations Support System (OSS) application (not shown). Consequently, the OSS application can obtain partial, complete or localised data records. Data collected from either the Mobile Node 108 or the Home Agent 106 constitute partial records, whereas data collected from both the Mobile Node 108 and the Home Agent 106 constitutes complete records. Localised data records are obtained by the OSS application, for example, querying a particular wireless cell or region of the communications network, for example the Internet 100, and request that all mobile nodes send their last set of stored records.

Once a handover is completed, or fails to complete, the data records collected from the Home Agent 106 and/or the Mobile Node 108 allow the handover procedure and delay to be traced and point of failure to be narrowed down or identified. Depending on the amount of information stored in the data structures corresponding to each entry of the data store, it can even be possible to diagnose the precise cause of a failure.

In relation to determining delays in respect of one or more stages of the handover mechanism, it should be appreciated that the internal clocks of the Home Agent 106 and the Mobile Node 108 are synchronised using any suitable known technique for clock synchronisation. However, if the internal clocks are not synchronised, it is still possible to monitor progress of a mobile IPv6 handover. It is also possible to compare timestamps in messages formed at a same location, for example timestamps in messages formed at the Mobile Node 108 or timestamps in messages formed at the Home Agent 106.

Whilst the above examples have been described in the context of the Mobile Node 108 and the Home Agent 106 having the monitoring functionality, it should be appreciated that the above described monitoring technique is very flexible. In this respect, the above described monitoring functionality can be applied to mobile nodes only, to home agents only, to mobile nodes and home agents, and, if possible, to correspondent nodes. If correspondent nodes are to participate in the above described monitoring technique, the correspondent nodes can share the architecture and functionality described above in relation to the Mobile Node 108. It should be appreciated that the above described monitoring technique is just one example of a Mobile IPv6 trace and that a series of messages forming a given complete Mobile IPv6 trace differs according to the configuration of the network being monitored. Consequently, the skilled person will appreciate that the architecture and functionality described above should be arranged to support as many permutations of Mobile IPv6 traces as possible.

It should be appreciated that although not described herein, the Correspondent Node 118 can possess the Mobile IPv6 trace functionality described herein.

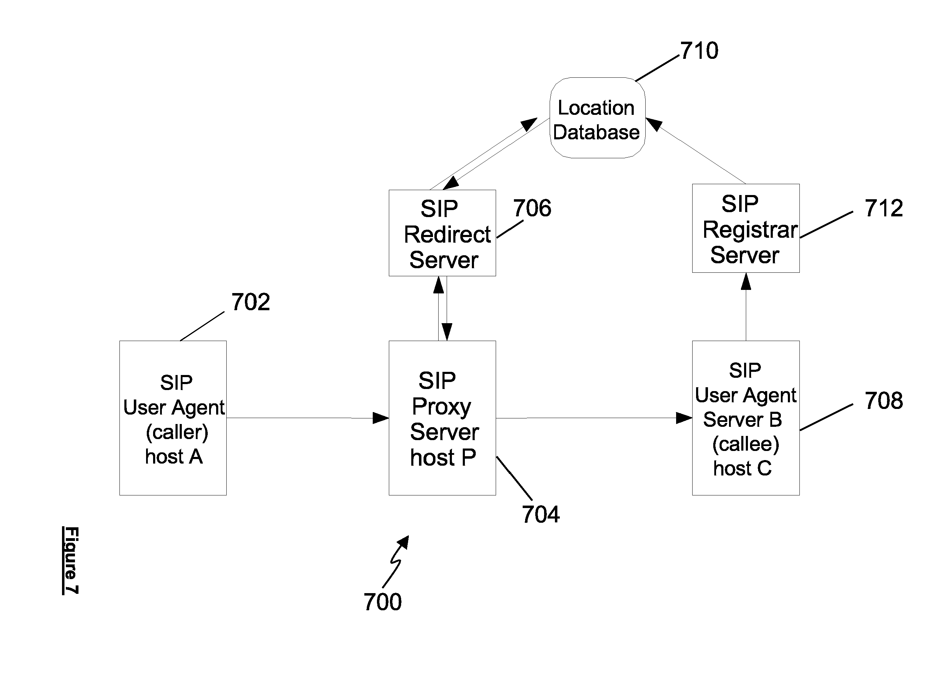

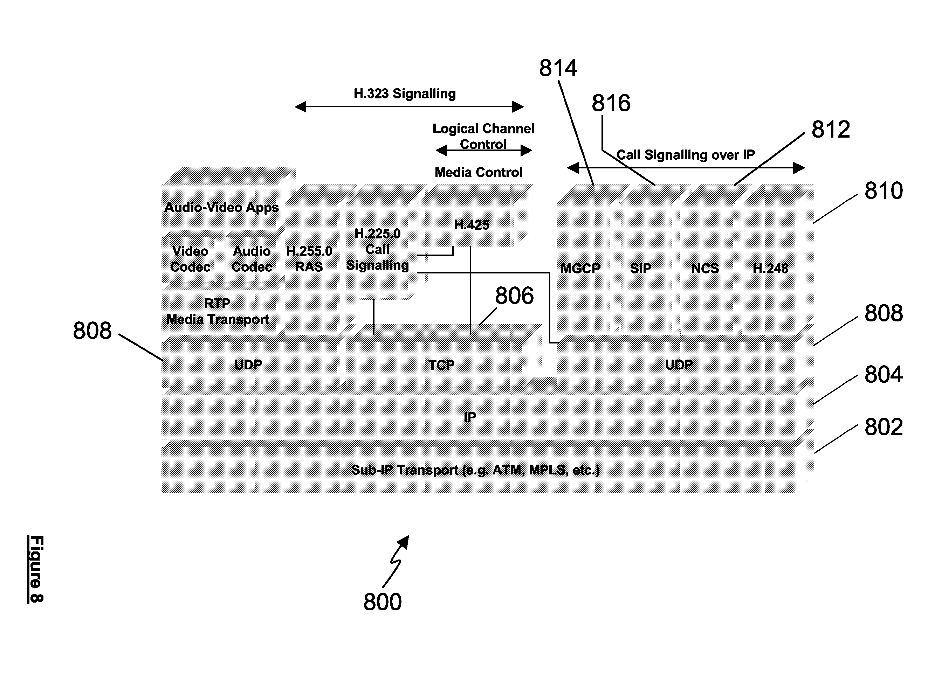

In another embodiment (Figures 7 and 8), a communications network 700 supports a protocol stack 800 (Figure 8) to provide Voice over Internet Protocol (VoIP) communications. The protocol stack 800 has sub-IP layers 802. Since these sub-IP layers 802 are not directly relevant to the operation of the communications network 700 in relation to VoIP communications, they will not be described further herein in order to preserve clarity and conciseness of description.

An IP layer 804 overlies the sub-IP layers 802. A transport layer then overlies the IP layer 804, for example a Transmission Control Protocol (TCP) layer 806 and/or a User Datagram Protocol (UDP) layer 808. In relation to the UDP layer 808, an H.248 layer 810, a Network-based Call Signalling (NCS) layer 812, a Media Gateway Control Protocol (MGCP) layer 814 and a Session Initiation Protocol (SIP) layer 816 overlie the UDP layer 808.

Referring back to Figure 7, to support the above-described protocol stack 800, the communications network 700 comprises a first host terminal 702. The first host terminal 702 supports a first user agent application that constitutes an end-point of communications for a SIP session. In this example, the SIP session relates to a VoIP communication. The first user agent can be used to make an invitation to a multimedia session, or accept or decline an invitation to join a multimedia session, as well as starting or terminating a call and managing existing calls. The first host terminal 702 is capable of communicating with a proxy server 704.

The proxy server 704 constitutes an intermediate component for relaying signalling messages between user agent applications to allow the user agent applications to establish a communications path therebetween. The proxy server 704 acts as both a client for a called server or user agent, and as a server for a calling user agent or forwarding server. It should be noted that, although a single proxy server is described in this example, the communications network 700 can comprise a series of such proxy servers between the first host terminal 702 and a second host terminal 704.

The proxy server 704 is capable of communicating with a redirect server 706 and a second host terminal 708, the second host terminal 708 supporting a second user agent application. At this point, it should be pointed out that a user agent that initiates a call is known as a "caller", whereas a user agent that responds or answers a call is known as a "callee". Typically, the user agents perform both caller and callee roles, examples of such user agents being either software or hardware SIP telephones that can, in this example, serve as the first and/or second host terminal 702, 708. Like the first user agent, the second user agent can be used to make an invitation to a multimedia session, or accept or decline an invitation to join a multimedia session, as well as starting or terminating a call and managing existing calls.

The redirect server 706 serves, inter alia, as an automated telephone enquiry operator that accepts SIP invitation requests to callees and maps addresses of the callees to a respective set of zero or more actual locations for each callee. Location information accessed by the redirect server 706 is stored in a location database 710, a registrar server 712 also being able to access the location database 710 for the purpose of updating the location database 710.

The registrar server 712 is responsible for accepting registration transactions from user agents, and in this respect the second host terminal 708 is capable of communicating with the registrar server 712. The registrar server 712 is assisted by other non-SIP specific architecture components not described herein, for example a Lightweight Directory Access Protocol (LDAP) directory server, in order to maintain up-to-date information on every registered user agent in the location database 710. The location database 710 maintains information regarding availability, location details and contact information of user agents.

The first host terminal 702, the proxy server 704, the redirect server 706, the registrar server 712 and the second host terminal 708 (hereinafter also referred to as "components"), are instrumented with so-called application agnostic logic, or dynamically loadable code, that is application aware or understands SIP signalling processes (hereinafter referred to as SIP-agnostic-logic (SIP-AL) modules) in order to implement measurement and/or measurement data sharing functionality. Further, different SIP-AL modules exist depending upon the type of messages, transactions or dialogues to be observed when assisting with a specific SIP telemetry task.

As described in Internet Engineering Task Force (IETF) Request For Comments (RFC) 3261 (http://www.faqs.org/rfcs/rfc3261.html), two types of generic SIP transactions are defined: an INVITE transaction and a non-INVITE transaction. Additionally, associated state machines are defined for the INVITE and non-INVITE transactions. The INVITE transaction state machine implements logic to instantiate an INVITE request "progression" message, which for example provides feedback to a user at the end of a line as to the progression of a call, and a final ACK message request, thereby implementing a three-way handshake. The non-INVITE transaction state machine, similarly, implements logic to support transactions that do not use ACK message requests.

Depending upon their functionality, the SIP-AL modules mentioned above implement fully or partially the two state machines defined by RFC 3261, but for the purpose of pattern matching so as to recognise relevant SIP signalling messages so as to effect measurements and record states pertaining to the SIP signalling messages relevant to a transaction of interest. The skilled person will now appreciate that partial implementation of the two state machines is possible, because the SIP-AL modules do not serve to assist in call set-up, but rather they are used to trace pertinent states of interest in a call set-up phase for the purpose of monitoring or diagnostic activities. Consequently, there are states in actual transaction state machines that are not relevant to the diagnostic tasks to be performed. In this and other embodiments, the SIP-AL modules can be simplified so as to reduce the amount of SIP signalling messages that have to be tracked by any one given SIP-AL module, thereby allowing a plurality of simplified SIP-AL modules to be deployed in respective network elements associated with receipt and/or transmission of a subset of SIP communications. Consequently, the processing requirements at the respective network elements can be reduced by confinement of the processing capabilities of the SIP-AL modules. For example, a discrete set of SIP-AL modules can be defined and implemented to monitor specific SIP transactions as follows:
- SIP-AL Register: for tracking signalling message patterns related to client registrations with a SIP registrar and location service;
- SIP-AL Invite: for tracking patterns related to SIP call set-up INVITE requests;
- SIP-AL Cancel: for tracking patterns related to cancelling an invitation to a SIP session;
- SIP-AL Info: for tracking patterns related to the transportation of further information mid-way through a SIP session;
- SIP-AL Bye: for tracking SIP session termination patterns;
- SIP-AL Options: for tracking queries used to gather capability information from a callee;

At each component, a data store, for example an active cache (not shown in Figure 7), of records pertaining to SIP transactions is maintained. The records are uniquely identified and keyed by exploiting SIP call-IDs, alphanumeric globally unique identifiers, such as 2345678@lancs.ac.uk. The SIP call-IDs can be stored as 32-bit hashes of such keys, thereby guaranteeing uniqueness within each active cache. Each active cache is managed by so-called soft-state principles, in that the records of each active cache are given lifetimes after which the records expire, resulting in the records contained therein being deleted automatically. However, this lifetime association can be used to track and monitor incomplete transactions, resulting in, prior to deletion, appropriate summaries of such incomplete transactions being generated and obtained by, for example sent to, an Operations Support Systems (OSS) application for further root cause analysis.

In operation, registration delay is a fundamental latency that needs to be monitored in respect of VoIP communications supported by the communications network 700. In this respect, as more users switch to using VoIP services and these users become mobile, the burden on SIP registrars, for example the registrar server 712, needs to be carefully monitored, since any faults can lead to large communication delays. When users are not appropriately registered in a VoIP architecture, their whereabouts remain undetermined and hence interested parties or correspondents are not able to contact them.

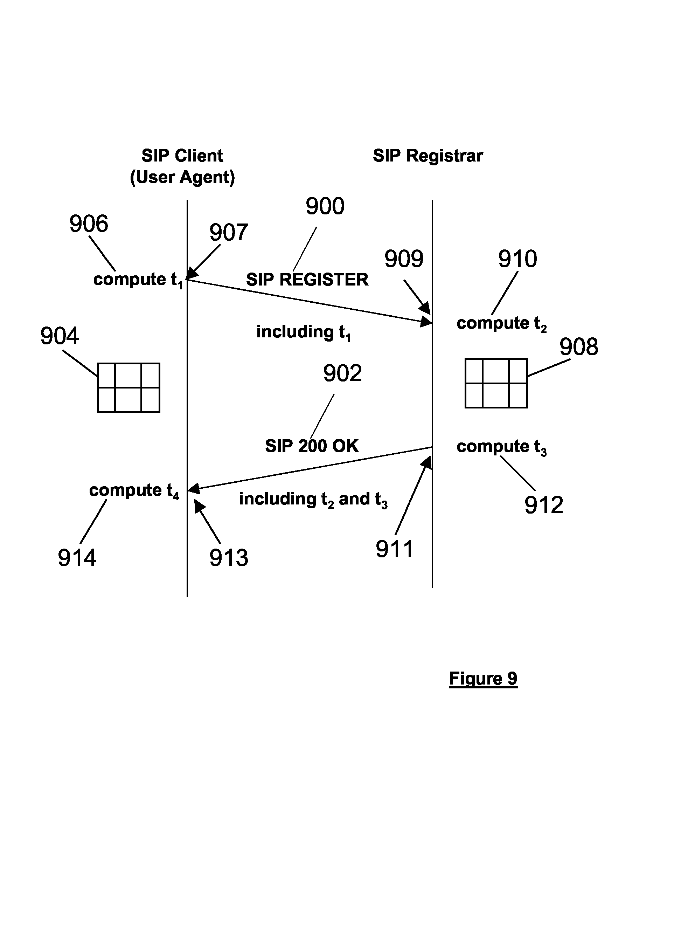

Referring to Figure 9, a registration process involves a simple transaction between the second user agent of the second host terminal 708 and the registrar server 712. The second user agent of the second host terminal 708 sends a SIP REGISTER request message 900 to the registrar server 712, which replies with a "200 OK" response message 902 once registration is complete.

For the telemetry task of measuring registration delay, the second host terminal 708 and registrar server 712 are appropriately instrumented with a SIP-AL Register module described above.

Consequently, a first SIP-AL Register module (not shown) detects generation of the SIP REGISTER request message 900, the SIP REGISTER request message 900, like other signalling messages, comprises a unique call-ID together with a source address and a destination address defining a SIP session.

Detection of the generation of the SIP REGISTER request message 900 triggers the first SIP-AL Register module to generate a first SIP Registration data record 904 populated with information pertaining to the SIP REGISTER request message 900, including for example source and destination IP addresses of the SIP REGISTER request message 900, source and destination port numbers of the SIP REGISTER request message 900, and other substrings extracted from the SIP REGISTER signalling message 900. It should be noted that the data required for the SIP Registration data record is configurable.

Thereafter, a first timestamp, t₁, is computed (906) representing the departure time of the SIP REGISTER request message 900 from the second user agent of the second host terminal 708, the SIP Registration data record 904 being added, together with the first timestamp, t₁, to a first active cache (not shown) of the second host terminal 708, the SIP Registration data record 904 being indexed by a call-ID of the SIP REGISTER request message 900.

A first IPv6 Destination Options Header (not shown) is then generated and inserted in between the payload and IPv6 header of the SIP REGISTER request message 900, the first Destinations Options Header being encoded as a first Type-Length-Value (TLV) object. The data borne in the Destinations Options Header of the SIP REGISTER request message 900 is identifiable by a suitably instrumented recipient thereof as relating to measurements of SIP Register transactions. The first timestamp, t₁, is included in the first Destinations Options Header. The SIP REGISTER request message 900 is then sent (907) to the registrar server 712.

Upon receipt (909) of the SIP REGISTER request message 900, the reception of the SIP-AL Register TLV object constituting the first Destination Options Header of the SIP REGISTER request message 900 triggers a second SIP-AL Register module (not shown) resident in the registrar server 712 to generate a second SIP Registration data record 908 equivalent to the first SIP Registration data record 904. Additionally, a second timestamp, t₂, reflecting the time of reception of the SIP REGISTER request message 900, is computed (910), and the second SIP Registration data record 908, together with the first timestamp t₁, extracted from the first TLV object, and the second timestamp, t₂, are stored, indexed by call-ID of the SIP REGISTER request message 900, in a second active cache (not shown) of the registrar server 712.

When the registrar server 712 is able to respond to the SIP REGISTER request message 900, the second SIP-AL Register module detects generation by the registrar server 712 of the "SIP 200 OK" response message 902 and uses the call-ID of the "SIP 200 OK" response message 902 to locate the second SIP Registration data record 908 in the second active cache of the registrar server 712. The SIP-AL Register module then, from the second SIP Registration data record 908 extracted from the second active cache of the registrar server 712, extracts the first and second timestamps t₁, t₂ and builds a second IPv6 Destination Options Header equivalent to the first IPv6 Destination Options Header described above. The second SIP-AL Register module then appends the second IPv6 Destination Options Header, encoded as a second TLV object, between the payload and IPv6 header of the "SIP 200 OK" response message 902, the second TLV object, the data being borne by the second Destinations Options Header of the "SIP 200 OK" response message 902 again being identifiable as relating to measurements of SIP Register transactions, and the second TLV object containing the second timestamp, t₂, and a newly computed (912) third timestamp, t₃, representing a departure time of the "SIP 200 OK" response message 902. Thereafter, the "SIP 200 OK" response message 902 is sent (911).

Finally, upon receipt (913) of the "SIP 200 OK" response message 902 by the second user agent, the second TLV object constituting the Destination Options Header of the "SIP 200 OK" response message 902 triggers the first SIP-AL Register module to use the Call-ID of the "SIP 200 OK" response message 902 to access an appropriate data record, namely the first SIP Registration data record 904, from the first active cache of the second host terminal 708, and append the appropriate record with a computed (914) fourth timestamp, t₄, corresponding to an arrival time of the "SIP 200 OK" response message 902, and the second and third timestamps t₂, t₃ borne by the second Destinations Options Header of the "SIP 200 OK" response message 902.

The measurement data shared between the second host terminal 708 and the registrar server 712 can then subsequently be collected from, in this example, the second host terminal 708 by the OSS application mentioned above. The mode of collection can be any suitable technique known in the art, including interrogation of the second host terminal 708 by the OSS application or transmission of the measurement data, in dedicated packets, to the OSS application in accordance with a predetermined release criterion, for example expiry of a predetermined period of time. Once in possession of the measurement data, the OSS application calculates, in this example, one or more of the following metrics:
- Total time for registration transaction, t = t₄- t₁
- Time spent at registrar, tᵣ = t₃- t₂
- Total transit time tₜᵣ = t - tᵣ
- One Way Delay transit times t_{owdreq} = t₂- t₁, and t_{owdres} = t₄- t₃

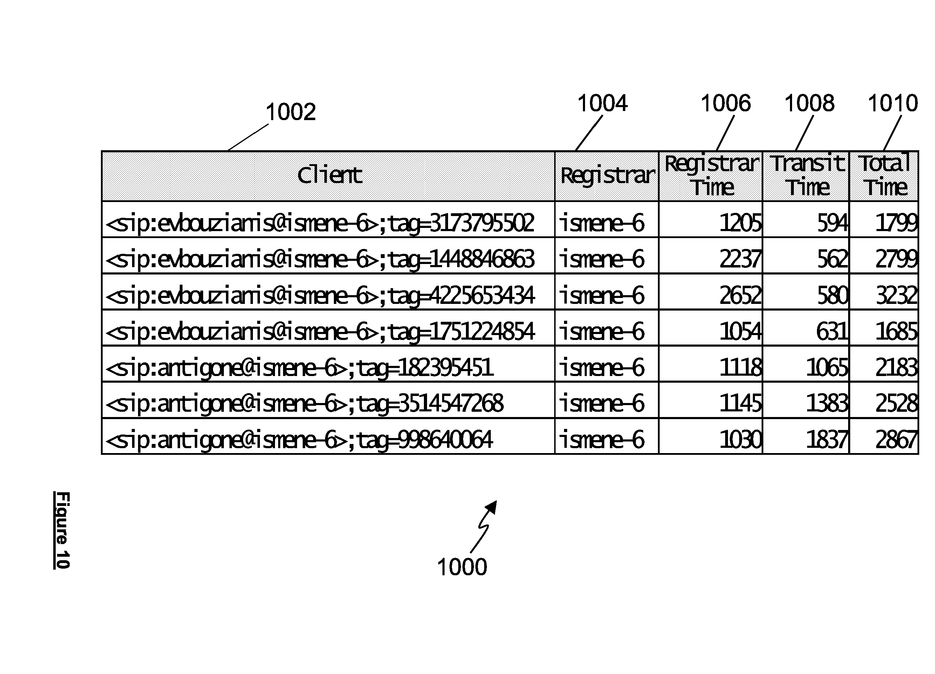

The results of the above calculations can be stored in a first table 1000 (Figure 10) organised so as to comprise, for each host terminal, or client 1002: the identity of the registrar server accessed 1004, the time spent at the registrar server identified 1006, the one-way delay transit time 1008 calculated, and the total time 1010 calculated. If the measurement data is collected from the registrar server 712, the OSS application is still able to calculate the time spent at the registrar server, tᵣ, 1006 and the single request one-way-delay transit time, t_{owdreq}, 1008.

To be a good service assurance tool, the OSS application abstracts over the simple concept of transactions to allow drill-down access to details pertaining to different levels of abstraction, for example dialogues and sessions. A dialogue is a group of related transactions, for example call set-up or client registration. While a session would represent a complete SIP call identified through the globally unique call ID, the session can be made up of multiple dialogues, but all dialogues will have the same call ID.

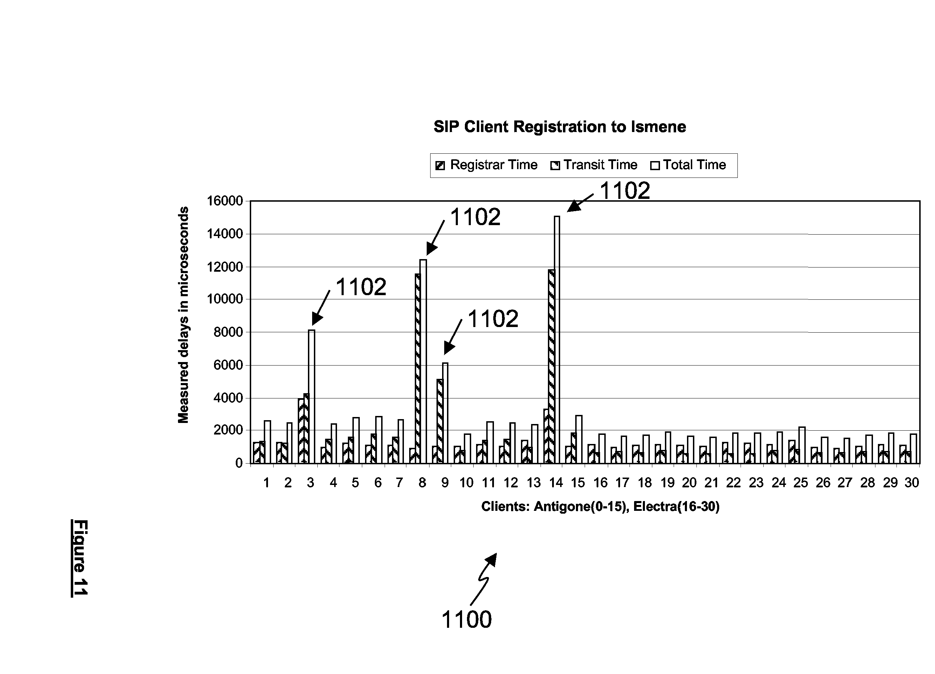

Hence, using the measurement data collected, the OSS application can evaluate the performance of the registrar server 712 and the experience of the second host terminal 708. The results of the calculations, i.e. the contents of the first table 1000, can be represented, for example, as a bar chart 1100 (Figure 11) showing peak delays 1102 that can be easily identified by an engineer charged with maintaining reliable operation of a VoIP service.

Also, the skilled person will appreciate that since the various measurements have been distributed to both measurement points, in this example the second host terminal 708 and the registrar server 712, most of the data needed to effect these calculations, and any subsidiary identifying information, are available at these measurement points, thereby obviating the need for correlation.

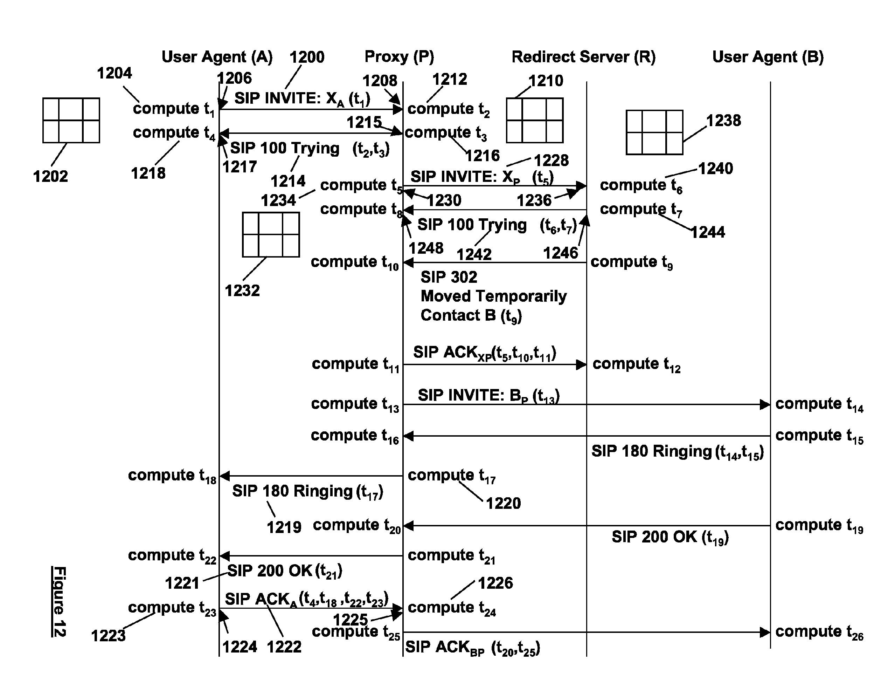

In another embodiment (Figure 12), the first host terminal 702 is instrumented with a first SIP-AL Invite module, described above, for detecting generation of a SIP INVITE X_{A} request message 1200, the SIP INVITE X_{A} request message 1200 having a unique Call-ID together with a source address and a destination address defining a SIP session. Upon detection of the SIP INVITE X_{A} request message 1200, the first SIP-AL Invite module creates a first SIP Invite data record 1202 and computes (1204) a first timestamp, t₁, corresponding to a departure time of the SIP INVITE X_{A} request message 1200. The first SIP Invite data record 1202 is then added, together with the first timestamp, t₁, to a first active cache of the first host terminal 702, indexed by a Call-ID of the SIP INVITE X_{A} request message 1200.

A first IPv6 Destination Options Header is also generated and inserted between the payload and IPv6 header of the SIP INVITE X_{A} request message 1200; the first IPv6 Destination Options Header being encoded as a TLV object comprising the first timestamp t₁. The TLV object constituting the first Destinations Options Header is identifiable as containing data relating to a measure of SIP Invite transactions. The SIP INVITE X_{A} request message 1200 is then sent (1206) to the proxy server 704.

The SIP INVITE X_{A} request message 1200 is received (1208) by the proxy server 704, the presence of the first Destination Options Header in the SIP INVITE X_{A} request message 1200 triggering a second SIP-AL Invite module in the proxy server 704 to generate a second SIP Invite data record 1210, equivalent to the first SIP Invite data record 1202. A second timestamp, t₂, is also computed (1212) corresponding to the reception time of the SIP INVITE X_{A} request message 1200 and, the second SIP Invite data record 1210 is added, together with the first timestamp, t₁, extracted from the TLV object and the second timestamp, t₂, to a second active cache (not shown) of the proxy server 704, again indexed by the Call-ID of the SIP INVITE X_{A} request message 1200.

If subsequent response signalling messages are generated and detected at the proxy server 704 having the same Call-ID as the Call-ID of the second SIP Invite data record 1210 created as a result of receipt of the SIP INVITE X_{A} request message 1200, i.e. in a forward direction, the second SIP-AL Invite module at the proxy server 704 accesses the second SIP Invite data record 1210 and extracts the second timestamp, t₂, not yet distributed to its downstream immediate neighbour, i.e. the first user agent of the first host terminal 702. In the present example, the subsequent response signalling message is a "SIP 100 Trying" response message 1214 to be sent to the first user agent of the first host terminal 702. The second SIP-AL Invite module then builds a second IPv6 Destination Options Header, which is inserted between the payload and IPv6 header of the "SIP 100 Trying" response message 1214. The second Destination Options Header of the "SIP 100 Trying" response message 1214 is encoded as a second TLV object and is identifiable by a suitably instrumented recipient thereof as bearing measurement data relating to the SIP Invite transaction. The second TLV object is provided with the second timestamps, t₂, and a third timestamp, t₃, which is computed (1216) and corresponds to a departure time of the "SIP 100 Trying" response message 1214. The "SIP 100 Trying" response message 1214 is then sent (1215) to the first user agent of the first host terminal 702.

Upon receipt (1217) of the "SIP 100 Trying" response message 1214, the first SIP-AL Invite module at the first host terminal 702 extracts the second and third timestamps t₂, t₃ from the second Destinations Options Header of the "SIP 100 Trying" response message 1214. A fourth timestamp, t₄, is also calculated (1218), the fourth timestamp, t₄, corresponding to a time of receipt of the "SIP 100 Trying" response message 1214. The first SIP-AL Invite module then accesses the first SIP Invite data record 1202 and appends the second, third and fourth timestamps t₂, t₃, t₄ to the first SIP Invite data record 1202.

If other subsequent response messages are generated by the proxy server 704, for example a "SIP 180 Ringing" signalling message 1219, having the same call-ID as that stored in the second SIP Invite data record 1210 created previously by the second SIP-AL Invite module, the second SIP-AL Invite module detects the generation of the subsequent response message and extracts timestamps not yet distributed to the first user agent of the first host terminal 1202, i.e. the downstream immediate neighbour. Thus, as described above in relation to the "SIP 100 Trying" response message 1214, the second timestamp, t₂, is retrieved. In the case of a "SIP 180 Ringing" signalling message 1219, a previously computed (1220) seventeenth timestamp, t₁₇, is retrieved through access to the second SIP Invite data record 1210 previously created and stored in the second active cache of the proxy server 704.

The second SIP-AL module then builds another IPv6 Destination Options Header and inserts it between the payload and IPv6 header of the subsequent response message. The another IPv6 Destination Options Header is encoded as another TLV object and is identifiable as containing measurement data relating to the SIP Invite transaction. The another TLV object also contains the hitherto undistributed timestamps, for example the second timestamp, t₂, in the case of the "SIP 100 Trying" response message 1214 or the seventeenth timestamp, t₁₇, in the case of the "SIP 180 Ringing" signalling message 1219. A newly computed timestamp, representing the departure time of the subsequent response message, is also included as part of the another TLV object. For example, in relation to the "SIP 100 Trying" response message 1214, the third timestamp, t₃, as described above is included in the TLV object. In the case of the "SIP 180 Ringing" signalling message 1219, the seventeenth timestamp, t₁₇, is the only undistributed timestamp and so is the only timestamp included in the another TLV object.

In the case of a "SIP 200 OK" response message 1220, the generation of the "SIP 200 OK" response message 1221 is detected by the second SIP-AL Invite module, resulting in the generation of a twenty-first timestamp, t₂₁, that is shared with the first user agent of the first host terminal 702 in the same way as already described above in relation to other subsequent response messages.

At the first user agent of the first host terminal 702, arrival of the subsequent response message is detected by the first SIP-AL Invite module of the first host terminal 702, resulting in the first SIP-AL Invite module of the first host terminal 102 computing an arrival time timestamp for the subsequent response message. The Call-ID of the received subsequent response message is then used by the first SIP-AL Invite module of the first host terminal 702 to access an appropriate SIP Invite data record stored in the first active cache of the first host terminal 702. The arrival time timestamp is then added to the appropriate SIP Invite data record along with any timestamp data carried in the another Destinations Options Header of the received subsequent response message. Therefore, in relation to receipt of the "SIP 200 OK" response message 1221, the first SIP Invite record 1202 stored in the first active cache of the first host terminal 702 comprises the first, second, third and fourth timestamps t₁, t₂, t₃, t₄, the seventeenth timestamp t₁₇, an eighteenth timestamp t₁₈, the twenty-first timestamp t₂₁, and a twenty-second timestamp t₂₂ corresponding to a time of receipt of the "SIP 200 OK" response message 1221 by the first user agent of the first user terminal 702.

In reply to the "SIP 200 OK" response message 1221, the first user agent of the first host terminal 702 generates a SIP ACK_{A} request message 1222 that is detected by the fist SIP-AL Invite module of the first host terminal 702. In response to detection of the SIP ACK_{A} request message 1222, the first SIP-AL Invite module access the first SIP Invite data record 1202 stored in the first active cache of the first host terminal 702 using the Call-ID of the SIP ACK_{A} request message 1222. The first SIP-AL Invite module calculates (1223) a twenty-third timestamp, t₂₃, corresponding to the departure time of the SIP ACK_{A} request message 1222, the first SIP Invite data record 1202 stored in the first active cache of the first host node 702 being populated with the twenty-third timestamp, t₂₃. A further IPv6 Destination Options Header is then produced and inserted in between the payload and IPv6 header of the SIP ACK_{A} request message 1222, the further Destinations Options Header being encoded as a further TLV object identifiably a suitably instrumented recipient thereof as carrying measurement data relating to the SIP-AL Invite transaction, the further TLV object also including any undistributed timestamps, for example, the fourth timestamp, t₄, the eighteenth timestamp, t₁₈, the twenty-second timestamp, t₂₂, and the twenty-third timestamp, t₂₃. The SIP ACK_{A} request message 1222 is then sent (1224) to the proxy server 704.

Upon receipt (1225) of the SIP ACK_{A} request message 1222 at the proxy server 704, the second SIP-AL Invite module of the proxy server 704 detects the further Destination Options Header and accesses, using the Call-ID of the SIP ACK_{A} request message 1222, the second SIP Invite data record 1210 stored in the second active cache of the proxy server 704, and the timestamps carried in the further Destinations Options Header of the SIP ACK_{A} request message 1222 are extracted therefrom. A twenty-fourth timestamp, t₂₄, corresponding to a time of arrival of the SIP ACK_{A} request message 1222 is computed (1226) and, once accessed, the second SIP Invite data record 1210 is updated to include the twenty-fourth timestamp, t₂₄, along with the fourth, eighteenth, twenty-second and twenty-third timestamps t₄, t₁₈, t₂₂, t₂₃ extracted from the further Destinations Options header of the SIP ACK_{A} request message 1212.

Using the measurement data shared between the first user agent of the first host terminal 702 and the proxy server 704 by distribution thereof in the manner described above, a number of useful calculations can be carried out to measure performance of the individual components involved in supporting a given SIP session as well as aggregate performance of a number of the components involved in supporting the given SIP session, in an analogous manner to that described above in relation to the previous embodiment, for example a call set-up time.

Of course, as part of the call set-up dialogue, other messages are exchanged between the proxy server 704 and other components that support SIP sessions, for example the redirect server 706 and the second host node 708. Consequently, and as a non-exhaustive example, after sending the "SIP 100 Trying" response message 1214, the proxy sever 704 generates a SIP INVITE X_{P} request message 1228 to be sent (1230) to the redirect server 706, the generation of the SIP INVITE X_{P} request message 1228 being detected by the second SIP-AL Invite module of the proxy server 704. Upon detection of the SIP INVITE X_{P} request message 1228, the second SIP-AL Invite module creates a third SIP Invite data record 1232 and computes (1234) a fifth timestamp, t₅, corresponding to a departure time of the SIP INVITE X_{P} request message 1228. The third SIP Invite data record 1232 is then added, together with the fifth timestamp, t₅, to the second active cache, indexed by the call-ID of the SIP INVITE X_{P} request message 1228. Also, a third IPv6 Destination Options Header is produced and inserted between the payload and IPv6 header of the SIP INVITE X_{P} request message 1228; the third IPv6 Destination Options Header is encoded as a TLV object identifiable as bearing measurement data relating to the SIP Invite transaction. The fifth timestamp t₅, is also included in the third TLV object.

Upon receipt (1236) of the SIP INVITE X_{P} request message 1228 by the redirect server 706, a third SIP-AL Invite module resident at the redirect server 706 detects the third Destination Options Header and creates, using the Call-ID of the SIP INVITE X_{P} request message 1228 as an index, a fourth SIP Invite data record 1238 in a third active cache of the redirect server 706. The fifth timestamp, t₅, carried in the third Destinations Options Header of the SIP INVITE X_{P} request message 1228 is also extracted from the third Destinations Options Header and added to the fourth SIP Invite data record 1238. A sixth timestamp, t₆, corresponding to a time of arrival of the SIP ACK_{P} request message 1228 is computed (1240) and, once accessed, the fourth SIP Invite data record 1238 is updated to include the sixth timestamp, t₆, along with the fifth timestamp t₅, extracted from the third Destinations Options Header of the SIP ACK_{A} request message 1228.

In response to the receipt of the SIP INVITE X_{P} request message 1228, the redirect server 706 generates a second "SIP 100 Trying" response message 1242. The third SIP-AL Invite module of the redirect server 706 detects generation of the second "SIP 100 Trying" response message 1242 and using the Call-ID of the "SIP 100 Trying" response message 1242, the third SIP-AL Invite module accesses the fourth SIP Invite data record 1238 and extracts the sixth timestamp, t₆, not yet distributed to the proxy server 704. The third SIP-AL Invite module then builds a fourth IPv6 Destination Options Header, which is inserted between the payload and IPv6 header of the second "SIP 100 Trying" response message 1242. The fourth Destination Options Header is encoded as a fourth TLV object and identifiable as carrying measurement data relating to the "SIP 100 Trying" transaction. The sixth timestamps, t₆, and a seventh timestamp, t₇, that is computed (1244) corresponding to a departure time of the second "SIP 100 Trying" response message 1242, are also included in the fourth TLV object created. The second "SIP 100 Trying" response message 1242 is then sent (1246) to the proxy server 704.

Upon receipt (1248) of the second "SIP 100 Trying" response message 1242, the second SIP-AL Invite module at the proxy server 704 extracts the sixth and seventh timestamps t₆, t₇ from the fourth Destinations Options Header of the second "SIP 100 Trying" response message 1242 and accesses the third SIP Invite data record 1210 and appends the sixth and seventh timestamps t₆, t₇ to the third SIP Invite data record 1210.

As previously mentioned, the above exchange of signalling messages with the corresponding distribution of timestamps between the proxy server 704 and the redirect server 706 is purely exemplary and the dialogue required to set-up a VoIP call between the first and second host terminals 702, 708 comprises other exchanges of signalling messages, for example between the one or more proxy server 704 and the second user agent of the second host terminal 708, as can be seen in Figure 12.

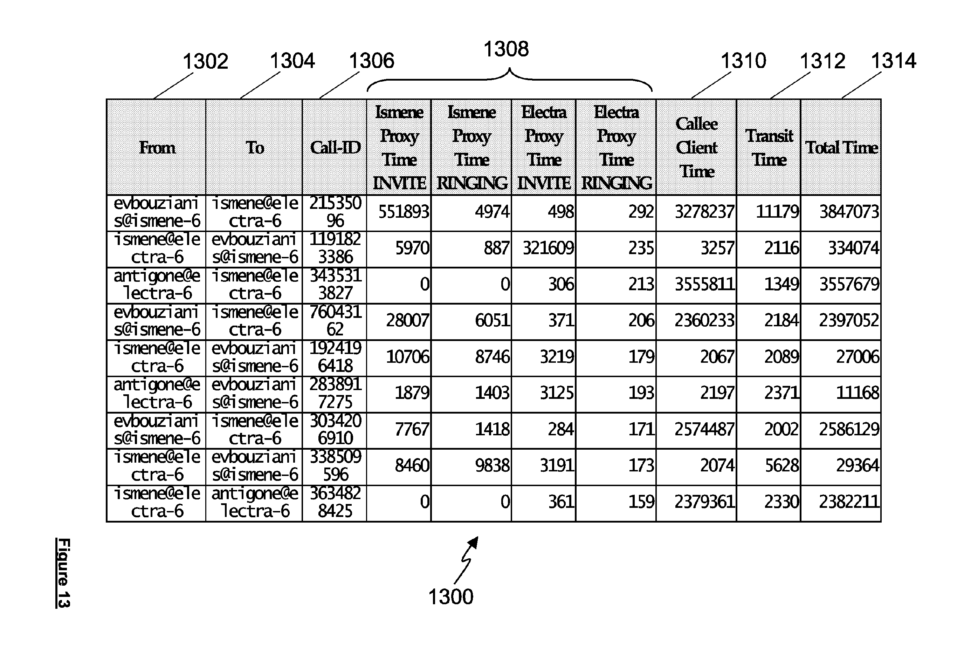

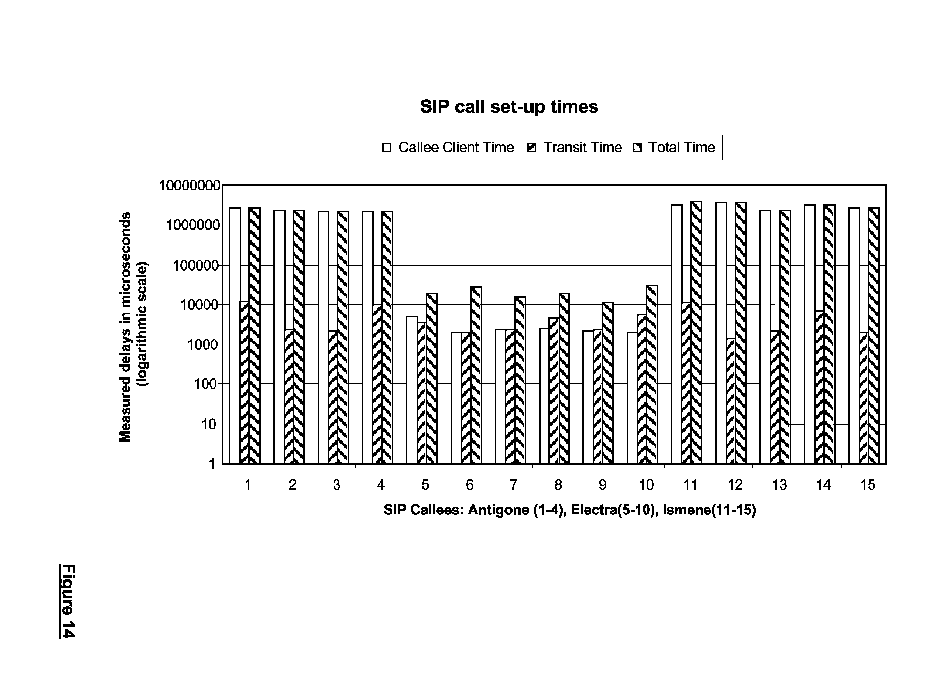

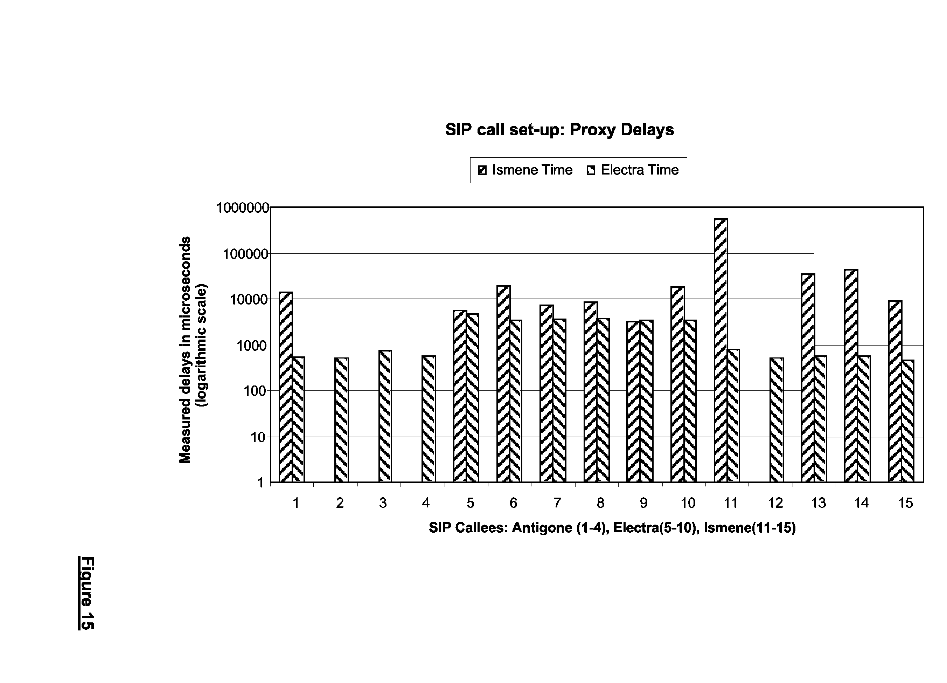

Measurement data collected and distributed between the various SIP supporting components of the communications network 700 can be used, again, to carry out calculations to measure performance of individual components or aggregate performance of a number of the components supporting a given SIP session, in the analogous manner to that already described above. One example of the aggregate performance is the time taken from sending the SIP INVITE X_{A} signalling message 1200 from the first host terminal 702 to receiving the "SIP 180 Ringing" response message at the first host terminal 702. To achieve such calculations, the measurement data is collected, in this example, by the OSS application described above and the measurement data used to perform calculations indicative of performance of one or more component. The results of the calculations performed by the OSS application are stored, in this example, in a second table 1300 (Figure 13) that is organised into columns of: source (URL type) address 1302, destination (URL type) address 1304, Call-ID 1306, times 1308 to send predetermined signalling messages to respective proxy servers, callee client time 1310 (the time spent processing the signalling message's request/response at a callee terminal), transit time 1312 and total time 1314. The data stored in the second table 1300 can then be represented graphically (Figures 14 and 15) to provide an engineer with a visual representation of call set-up times (Figure 14) or proxy delays (the time spent processing signalling messages at a particular proxy server) in relation to call set-ups (Figure 15).

Whilst the above examples describe particular ways of storing data, it should be appreciated that the manner of storage, for example the organisation of the data, can be varied. In this respect, the data can be organised as tables of data associated with a given parameter, such as message type.

Although the above examples have been described in the context of packet communication, it should be appreciated that the term "message" is intended to be construed as encompassing packets, datagrams, frames, cells, and protocol data units and so these term should be understood to be interchangeable.

Alternative embodiments of the invention can be implemented as a computer program product for use with a computer system, the computer program product being, for example, a series of computer instructions stored on a tangible data recording medium, such as a diskette, CD-ROM, ROM, or fixed disk, or embodied in a computer data signal, the signal being transmitted over a tangible medium or a wireless medium, for example, microwave or infrared. The series of computer instructions can constitute all or part of the functionality described above, and can also be stored in any memory device, volatile or non-volatile, such as semiconductor, magnetic, optical or other memory device.

## Claims

1. A method of sharing measurement data between a first node and a second node, the measurement data having been acquired by the first node and relating to an event associated with a handover mechanism or a SIP signalling transaction in a communications network the method comprising:
selecting a signalling packet to be sent from the first node to the second node as part of a process related to the handover mechanism or the SIP transaction, the signalling packet having a data structure definition associated therewith; and
incorporating the measurement data in the signalling packet in accordance with the data structure definition prior to sending the signalling packet to the second node.

2. A method as claimed in Claim 1, further comprising:
receiving the signalling packet associated at the second node; and
obtaining the measurement data from the signalling packet.

3. A method as claimed in Claim 1 or Claim 2, wherein the handover mechanism or the SIP transaction is supported by a Mobile IPv6 protocol.

4. A method as claimed in any one of the preceding claims, wherein the data structure definition is an extendible schema.

5. A method as claimed in any one of the preceding claims, wherein the first node is any one of a home node, a mobile node or a correspondent node when the event is associated with the handover mechanism.

6. A method as claimed in any one of Claims 1 to 4, wherein the first node is any one of a host node, a proxy node, or a redirect node when the event is associated with the SIP transaction.

7. A method of measuring network performance in relation to a plurality of nodes in a communications network, the plurality of nodes comprising a first pair of communication nodes, the first pair of communication nodes participating in a signalling transaction for a SIP communication, the method comprising:
sharing measurement data between the first pair of communication nodes according to the method of sharing measurement data between the first node and the second node as claimed in Claim 1 when the event is associated with the SIP signalling transaction, the first pair of communication nodes corresponding to the first node and the second node.

8. A method as claimed in Claim 7, wherein the plurality of nodes comprises a second pair of communication nodes, the second pair of communication nodes participating in the signalling transaction for the SIP communication, the method further comprising:
sharing measurement data between the second pair of communication nodes according to the method of sharing measurement data between the first node and the second node, the second pair of communication nodes corresponding to the first node and the second node.

9. A method as claimed in Claim 8, wherein one of the first pair of communication nodes is common to the first and second pairs of communication nodes.

10. A method as claimed in any one of Claims 7 to 9, further comprising:
communicating the measurement data to a remote monitoring application.

11. A computer program code element comprising computer program code means to make a computer execute the method as claimed in any one of the preceding claims.

12. A computer program code element as claimed in Claim 11, embodied on a computer readable medium.

13. A network node apparatus for participating in a handover mechanism or a SIP signalling transaction in a communications network, the apparatus comprising:
a data store;
a processing resource arranged to provide:
a measurement recorder for recording measurement data relating to an event associated with the handover mechanism or the SIP transaction in the data store;
a packet selector for identifying a signalling packet forming part of a process related to the handover mechanism or the SIP transaction and to be sent, when in use, to another node participating in the handover mechanism or the SIP transaction, the signalling packet having a data structure definition capable of supporting incorporation of additional information in the signalling packet;
a message modifier for incorporating the measurement data in the signalling packet in accordance with the data structure definition of the signalling packet; and
a packet forwarder for forwarding the signalling packet to the another node.

14. A network node apparatus for participating in a handover mechanism or a SIP signalling transaction in a communications network, the apparatus comprising:
a data store;
a processing resource arranged to provide:
a message receiver for receiving a signalling packet forming part of a process related to the handover mechanism or the SIP transaction and incorporation of measurement data therein by virtue of a data structure definition of the signalling packet, the measurement data relating to an event associated with the handover mechanism or the SIP transaction;
a measurement extractor for extracting the measurement data from the signalling packet; and
a data recorder for recording the measurement data in the data store.

15. A system for sharing measurement data between a first node and a second node, the measurement data having been acquired, when in use, at the first node and relating to an event associated with a handover mechanism or a SIP signalling transaction in a communications network, the system comprising:
a packet selector for selecting a signalling packet to be sent from the first node to the second node as part of a process related to the handover mechanism or the SIP transaction, the signalling packet having a data structure definition associated therewith; and
a packet modifier for incorporating the measurement data in the signalling packet in accordance with the data structure definition prior to sending the signalling to the second node.

16. A system for measuring network performance in relation to a plurality of nodes in a communications network, the plurality of nodes comprising a first pair of communication nodes, the first pair of communication nodes participating, when in use, in a signalling transaction for a SIP communication, the system comprising:
the system for sharing measurement data between the first node and the second node as claimed in Claim 15 when the event is associated with the SIP signalling transaction, the first pair of communication nodes corresponding to the first node and the second node.
